(19) Europäisches Patentamt
European Patent Office
Office européen des brevets

(11) **EP 1 662 914 B1**

(12) **EUROPEAN PATENT SPECIFICATION**

(45) Date of publication and mention
of the grant of the patent:
**27.02.2008 Bulletin 2008/09**

(21) Application number: **04779612.3**

(22) Date of filing: **30.07.2004**

(51) Int Cl.:
*A23L 3/10* (2006.01)   *B65B 55/14* (2006.01)

(86) International application number:
**PCT/US2004/024608**

(87) International publication number:
**WO 2005/011409 (10.02.2005 Gazette 2005/06)**

(54) **ASEPTIC PROCESSING SYSTEM AND METHOD**

ASEPTISCHES BEHANDLUNGSSYSTEM UND -VERFAHREN

SYSTEME ET PROCEDE DE TRAITEMENT ASEPTIQUE

(84) Designated Contracting States:
**AT BE BG CH CY CZ DE DK EE ES FI FR GB GR HU IE IT LI LU MC NL PL PT RO SE SI SK TR**

(30) Priority: **30.07.2003 US 491433 P**

(43) Date of publication of application:
**07.06.2006 Bulletin 2006/23**

(73) Proprietor: **FMC Technologies, Inc.
Houston, TX 77067 (US)**

(72) Inventors:
• **WENG, Zhijun
Fresno, CA 93720 (US)**
• **LEVATI, Manuele
I-43100 Parma (IT)**

• **DAHL, Jeff
Fresno, CA 93711 (US)**
• **JONES, Kenneth
Winnetka, IL 60093 (US)**
• **MATTHEWS, Glenna
Stockton, CA 95219 (US)**

(74) Representative: **Stainthorpe, Vanessa Juliet et al
Harrison Goddard Foote
Fountain Precinct
Balm Green
Sheffield S1 2JA (GB)**

(56) References cited:
**EP-A- 0 171 735      US-A- 2 639 991
US-A- 2 909 985      US-A- 3 886 296
US-A- 4 296 068**

**Description**

CROSS-REFERENCE TO RELATED APPLICATION

This application claims the benefit of U.S. Provisional Patent Application No. 60/491,433, filed July 30, 2003.

FIELD OF THE INVENTION

The present invention relates to sterilizing food products, and in particular to a method and system for aseptically sterilizing pumpable foods containing particles.

BACKGROUND OF THE INVENTION

The traditional manner of processing particulate-containing food products consists of placing the food product in individual cans, sealing the cans and then heating the cans, perhaps while rotating the cans to mix the food product in the can. This process has been generally effective in killing bacteria in the canned food product; however, this process may be labor intensive and require extensive machinery in order to reach high production rates. Also, the empty cans require considerable storage space prior to being filled. In addition, the in-can sterilization process often results in the degradation of the food product, including from an appearance and taste standpoint.

Thermal (aseptic) processes were developed to process food products as a continuous stream or flow whereby the food product and the food package are separately sterilized. After sterilization, the food product is aseptically filled into the package in an environment that preserves sterility until the package is sealed. Aseptic processing of food products not only enables lightweight and inexpensive packaging to be used, but also makes it possible to employ packaging that is stored in a collapsed position until used and also packaging of unlimited sizes.

To date, aseptic processing of food has been primarily limited to high acid, clear or homogeneous food products, such as juices, puddings and diced tomatoes. Typically in such foods, the required cooking temperatures and holding times are relatively low and the likelihood of health hazards from improper processing is also insignificant. Aseptic processing of such homogeneous and high-acid food products generally involves the use of an initial positive displacement pump to deliver a continuous stream of food product into a processing station. The processing station typically includes one or more heat exchangers for heating the food product, an intermediate holding tube arrangement, followed by one or more cooling heat exchangers. A back pressure valve is typically located downstream to create a flow restriction and to generate system pressure. The processed food product may then be routed directly to an aseptic filling station or perhaps to a storage aseptic tank to accumulate the processed food product prior to being dispensed into aseptic containers.

Aseptic processing heretofore has not been widely used for low acid foods having particulates, although the use of aseptic processing would be a great advantage in processing of low-acid particulate foods, such as soups and stews. Aseptic processing systems for low acid foods, especially such foods containing particulates, are currently expensive and typically have limited product throughput. Moreover, to meet the required governmental regulations for processing low acid foods containing particulates, the required technology is complex in terms of not only the basic processing, but also the packaging for the product, as compared to conventional food processing methods. Nonetheless, an efficient aseptic process for low acid foods containing particulate can result in reduced processing costs and higher processing rates, as well as increased product quality due to a fresher-appearing and better-tasting product.

Challenges do exist in using aseptic processing for low acid products containing particulates. In this regard, government regulations covering aseptic processing require maintaining a close tolerance between lethality standards and actual conditions. If a manufacturer seeks to process the low acid food on a conservative basis by overheating to exceed lethality requirements, the taste, texture and quality of the food product likely would be adversely affected from the overcooking. While heat transfer can be measured fairly precisely from the heating tubes and holding tubes to a uniform liquid, the measurement and heat transfer modeling is much more complex in liquid foods containing particulates. In liquid foods containing particulates, such as gravies, soups, and stews, heat transfer depends on the interaction between the particulates in the liquid, residence times for the liquids and the particulates and other factors which complicate analysis. In the liquid-particulate mixtures, the slowest heating locations will be at the center of the largest particulates or at the center of the fastest moving particulates, which often refer to the "worst case" particle. The residence time of each food particle in the flow can be difficult to determine. Residence time is an important variable because it is used to calculate the lethality achieved in the aseptic process. As is known in the art, lethality can be calculated as a function of time using equations that require temperature and residence time measurements among other measurements. Alternatively stated, lethality is the amount of time a particle is subjected to a temperature sufficient to kill the food spoilage microorganisms and pathogens to an adequate safety level for protecting public health and for food preservation. One such example of spoilage microorganism for low-acid food is *Clostridium botulinum* spores, which produce deadly toxin if it is allowed to grow.

It is important to develop a model of the aseptic process that accurately corresponds to the lethality achieved in the food product being processed. The U.S. Food and Drug Administration will require such a model in order to accept the aseptic process of low-acid foods containing particles for commercial use.

The present invention provides aseptic processes for food products containing particulates, whether of low acid or high acid.

SUMMARY OF THE INVENTION

The present invention provides a method for administering an aseptic sterilization process to a pumpable, food product having particulates. The method includes controlling the aseptic sterilization process to perform aseptic sterilization of the food product according to parameters determined by the validated model, which in turn is based at least in part on the physical characteristics of the food products being sterilized. At least one of the scheduled parameters is monitored during the sterilization process. If a deviation occurs in the monitored parameter, the portion of the food product being sterilized that is associated with such deviation is identified and then diverted from the remainder of the food product being sterilized.

In accordance with a further aspect of the present invention, the food product is of low acidity, and the aseptic sterilization process includes heating a continuous flow of the food product to a desired temperature, routing the continuous flow food product through a holding apparatus to achieve a desired sanitation level, and then cooling the continuous flow food product after the desired level of sterilization has been achieved.

In accordance with a further aspect of the present invention, the parameter that is monitored is the temperature of the food product. In this regard, the temperature of the food product is monitored at a plurality of different locations along the processing of the food product, including during the heating of the food product and during the routing of the food product through the holding apparatus. The temperature of the food product may be monitored, for example, before the heating of the food product, after the heating of the food product, before the routing of the food product to the holding apparatus, after the food product has been routed through the holding apparatus, before the cooling of the food product, during the cooling of the food product, and/or after the cooling of the food product.

In accordance with a further aspect of the present invention, the liquid phase of the food product is heated separately from the particulates in a continuous flow system and then routed to the holding apparatus to provide sufficient time for a desired level of lethality to be achieved in the liquid phase. Simultaneously, the particulates with uniform residence time, separated from the liquid phase, are heating to a desired level to also achieve a desired lethality level. Thereafter, the liquid phase and particulates are combined together and cooled under aseptic conditions for aseptic filling.

In accordance with a further aspect of the present invention, the aseptically sterilized food product is routed through a routing network to either an aseptic surge or to an aseptic filler to fill the sterilized containers with the sterilized food product. Also, the sterilized food product may be alternatively routed away from the aseptic surge tank and/or aseptic filler under predetermined conditions.

The present invention also provides a system for carrying out the aseptic process for the present invention. The system includes a heating subsystem for heating the food product as the food product continuously flows through the heating subsystem. Next, a holding subsystem holds the flowing food product for a pre-selected time duration to achieve a desired lethality in the food product. Next, a cooling subsystem cools the flowing food product after the desired level of lethality has been achieved. A control system controls the flow of the food product through the heating, holding and cooling subsystems according to scheduled process parameters predetermined by the validated model, which model is based at least in part on the physical parameters of the food product. Also, a monitoring subsystem monitors the heating, holding and cooling of the food product to verify that the heating, holding and cooling of the food product is carried out in accordance with the scheduled parameters. The monitoring subsystem also indicates if one of the scheduled parameters is not met. If this is the case, the control system identifies the portion of the food product associated with such deviation and diverts such identified portion of the food product from the remainder of the food product

BRIEF DESCRIPTION OF THE DRAWINGS

The foregoing aspects and many of the attendant advantages of this invention will become more readily appreciated as the same become better understood by reference to the following detailed description, when taken in conjunction with the accompanying drawings, wherein:

FIGURE 1 is a schematic view showing the components of an aseptic processing system of the present invention;
FIGURE 2 is a schematic view of the heating section of the present invention;
FIGURE 3 is a schematic view of the holding section or loop section of the present invention;
FIGURE 4 is a schematic view of the cooling section of the present invention;

FIGURE 5 is a flow diagram of the operation of the aseptic processing system of the present invention;
FIGURE 6 is a plot of the fluid and the fastest moving particulate center temperatures of a food product versus time utilizing the aseptic sterilization system of the present invention;
FIGURE 7 is a schematic view of an alternative embodiment of the present invention for sterilizing food particle and liquid portions in a separate mode;
FIGURE 8 is a schematic view of a mixer used to mix separately heated particulate and liquid phases of a heterogeneous food product; and
FIGURE 9 is a schematic view of a further alternative embodiment of the present invention for sterilizing food particle and liquid portions in a separate mode.
FIGURE 10 is a schematic of another embodiment of the present invention.

DETAILED DESCRIPTION OF THE PREFERRED EMBODIMENT

The aseptic processing system and method of the present invention includes determining the lethality delivered by the system, which in turn requires a mathematical model of the system taking into consideration the heat transfer to the food product through operation of the aseptic system of the present invention. The mathematical model is used to set process parameters for the aseptic system of the present invention, including product physical properties such as "worst case" particle size and its geometry, particle thermal conductivity, specific heat and density, particle/liquid heat transfer coefficient, particle fraction, fastest moving particle residence time etc and process parameters such as initial product temperature, process temperatures, flow rates of the food product as well as flow rates of the heating and cooling media. Other process parameters for the aseptic system of the present invention include the temperatures of the heating and cooling media. The aseptic system of the present invention is operated with the determined process parameters, which are monitored during the use of the process. Additional parameters are also monitored, including the temperature of the food product during processing. If a significant deviation of the monitored parameters occurs during processing, the affected food product is identified and diverted away from the remainder of the food product that remains within the process parameters.

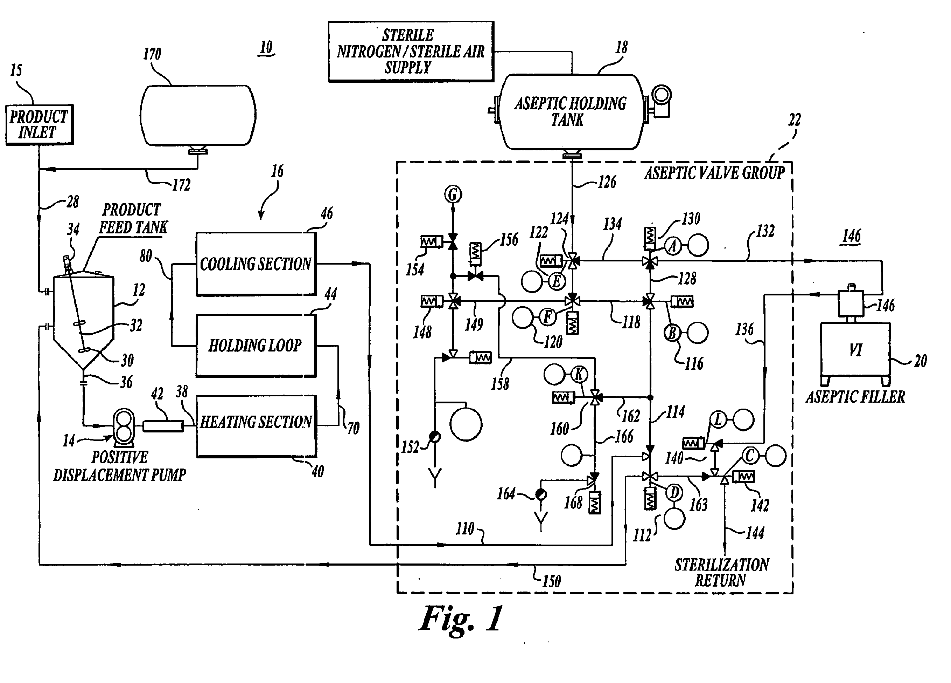

Referring initially to FIGURE 1, the aseptic system 10 of the present invention is schematically illustrated. The system 10, in general, includes a food product storage and feed tank 12 and a pumping system 14 to deliver the food product 15 to an aseptic sterilizer 16. The sterilizer 16 heats the food product to a predetermined sterilization temperature and maintains the product in a holding section for a predetermined period of time to achieve a desired level of lethality, and then cools the food product down to a temperature suitable for dispensing into aseptic containers. From the sterilizer 16, the food product is routed to an aseptic holding tank 18 which acts as a surge tank and also could provide back pressure to the sterilizer. An aseptic filler 20 is in fluid flow communication with the storage tank 18 and the sterilizer 16. An aseptic routing matrix 22 (or valve matrix) routes the sterilized food product from the sterilizer 16 to the aseptic holding tank 18 and/or the aseptic filler 20, and also from the aseptic holding tank to the filler. In addition, the routing matrix allows for food product recirculation from the sterilizer 16 to the feed tank 12 if the desired process parameters are not met during sterilization. The aseptic routing matrix also recirculates the sterilized food product from the filler to the feed tank if needed. In addition, the routing matrix provides live steam blocks to isolate the aseptic tank 18 and/or filler 20 from the sterilizer 16, or to otherwise isolate the aseptic portions of the system 10 from the non-aseptic portions.

Describing the present invention in more detail, formulated food product 15 is routed to a feed tank 12 through an inlet line 28 for storage prior to sterilization. Such food product may be of various homogeneous or heterogeneous compositions capable of flowing through the system 10. Examples of the homogeneous food products may include puddings, yogurt or soups. Heterogeneous food products include particulates and a liquid, for example, diced tomatoes, gravies and soups. The food product may be of low pH value, such as diced tomatoes, or of high pH value, for example gravies or soups. The storage tank 12 may include a mixing apparatus, for example, as schematically illustrated, agitating blades 30 mounted on a rotary shaft 32, powered by an electric motor 34. The motor may be operated as needed to maintain good mixing of the food product being stored within the tank, especially when food product 15 is being discharged from the tank through outlet 36 to the aseptic sterilizer 16.

A pump 14 transfers the food product 15 from tank 12 to the aseptic sterilizer 16. The pump 14 can be of various configurations to provide a substantially constant volume of the food product to the aseptic sterilizer. Suitable pumps can be positive displacement rotary or piston pumps. The food product 15 flows from pump 14 through line 38 to the heating section 40 of the sterilizer 16. A flow meter 42 is located in line 38 between the pump 14 and the heating section 40 to measure the volumetric or mass flow of the food product 15 entering the aseptic sterilizer 16.

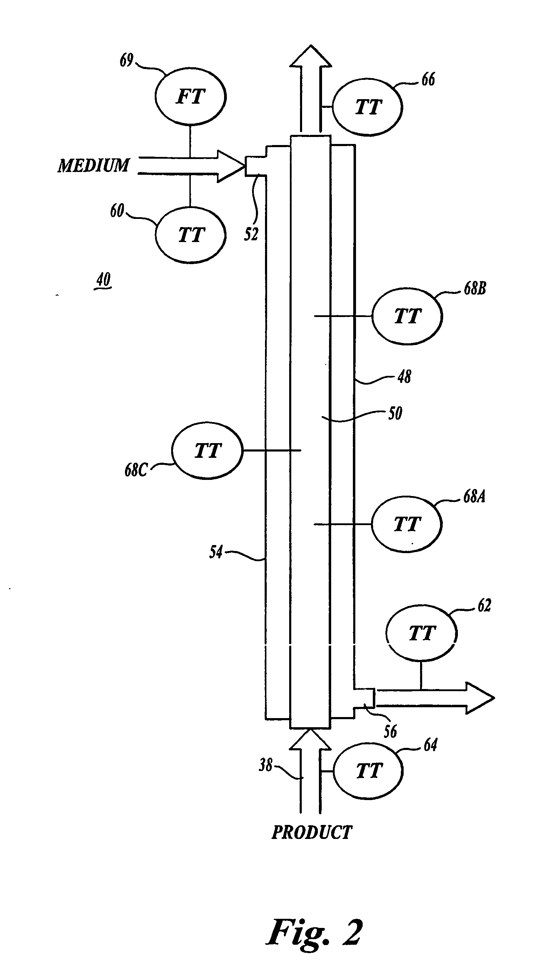

As illustrated, the aseptic sterilizer 16 consists of three basic sections, a heating section 40 to heat the food product to a desired temperature, a holding section or loop 44 through which the food product flows, during which time the temperature of the particulates are increased from the heat energy of the liquid, and then a cooling section 46 to cool the food product to an acceptable level for packaging, for instance at the aseptic filler 20. The sections of the aseptic sterilizer 16 are illustrated in more detail in FIGURES 2, 3 and 4.

EP 1 662 914 B1

Referring initially to FIGURE 2, the heating section 40 is schematically illustrated as including a heat exchanger 48 which is in flow communication with the pump 14 through inlet line 38. The heat exchanger 48 is illustrated as a simple counter-flow device wherein the food product 15 flows through the center 50 of the heat exchanger, and a heating medium, for example, steam or hot water, enters the heating exchanger at port 52 located at the distal end of the heat exchanger, flows through the outer annulus 54 of the heat exchanger and exits the heat exchanger through outlet port 56 located in the proximal end of the heat exchanger. It is to be understood that the heat exchanger 48 can be of various configurations; for instance, it can be of a dimple type tubular heat exchanger as shown in U.S. Patent No. 5,375,654; a scrape surface type heat exchanger; or a triple tubular heat exchanger. Also, rather than utilizing a single heat exchanger, such as heat exchanger 48, several heat exchangers may be used in series or parallel to heat the food product 15 to a desired level.

The heating section 40 of the present invention is also characterized by the use of numerous temperature sensors, including sensors 60 and 62 to sense the inlet and outlet temperatures, respectively, of the heating medium used in heat exchanger 48. Temperature sensors 64 and 66 also sense the temperature of the food product at the entrance and exit of the heat exchanger 48. Moreover, a plurality of additional temperature sensors 68A, 68B, 68C, etc., are positioned along the heat exchanger 48 to sense the temperature of the food product 15 and heating medium as it is being heated by the heat exchanger. In this regard, sensor 68C is located at or near the center of the heat exchanger. In this manner, the entire temperature profile of the food product as it flows through the heat exchanger 48 may be monitored. Also, a flow meter 69 is positioned adjacent the heating medium entrance 52 to measure the volumetric flow rate of the heating medium through the heat exchanger 48.

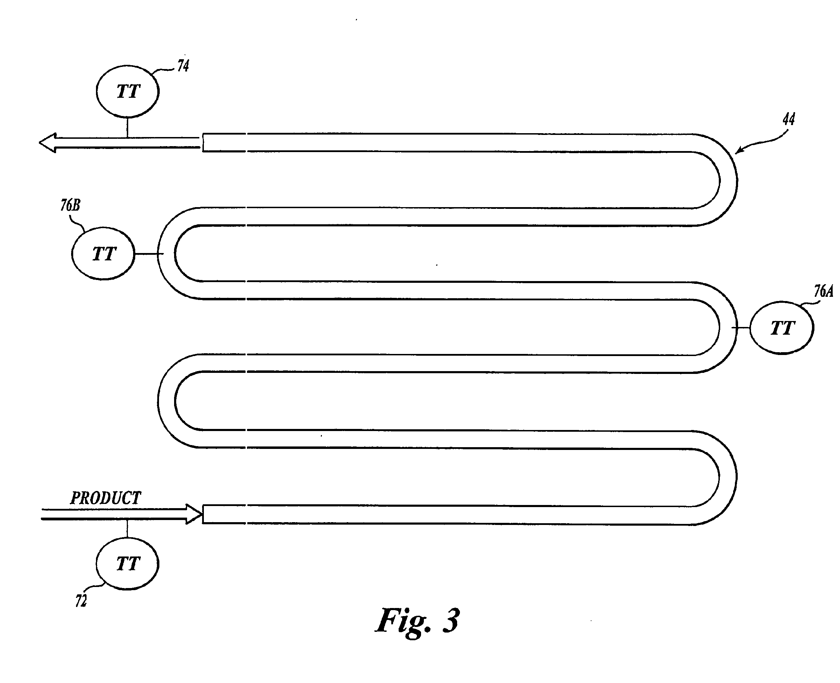

The food product 15 flows from the heating section 40 to the holding section or loop 44 through line 70. Referring to FIGURE 3, the holding section or loop 44 consists of an appropriate length of piping through which the food product 15 flows for a long enough length of time to give particulates in the food product time to reach a desired temperature, so that a required lethality level is achieved in the particulates of the food product. As shown in FIGURE 3, the tubing of the holding section may be arranged in a serpentine fashion so as to be volumetrically efficient with sloping upward to meet the regulatory requirement. Also, the tubing may be covered with an outer insulating layer in a standard manner so as to minimize the heat loss to the ambient. Further, temperature sensors 72 and 74 measure the temperature of the food product 15 entering the holding section 44, as well as exiting the holding section. In addition, a plurality of additional temperature sensors 76A, 76B, etc., are utilized between the entrance and exit ends of the holding section 44 to monitor the temperature of the food product 15 as it flows through the holding section.

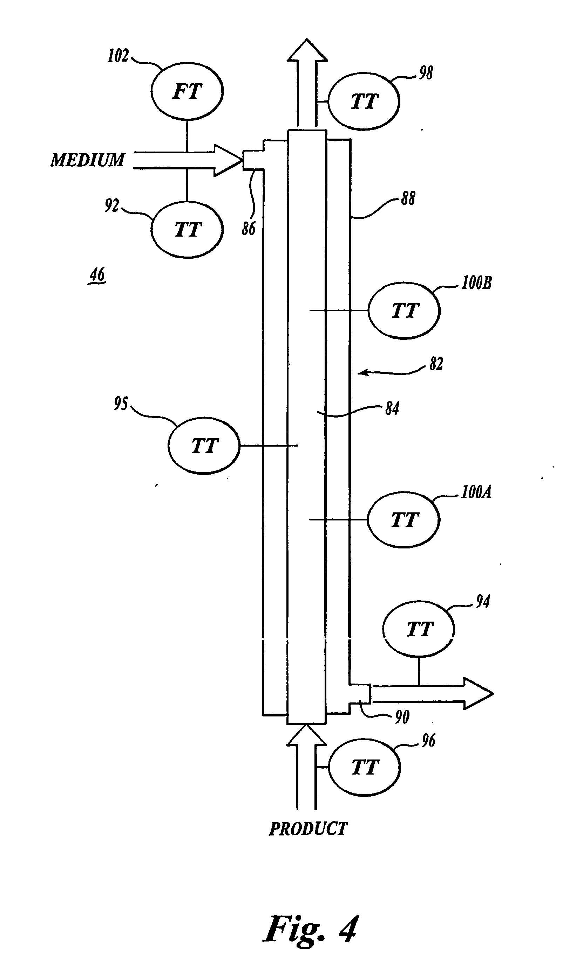

From holding section 44, the heated food product 15 is routed to cooling section 46 through line 80. Referring to FIGURE 4, the cooling section 46 includes a heat exchanger 82 which is illustrated as a simple counter-flow device wherein the food product 15 flows through the center 84, and a cooling medium, for example, cold water, enters the heat exchanger at port 86 located at the distal end of the heat exchanger, flows through the outer annulus 88 of the heat exchanger and exits the heat exchanger through outlet port 90 located at the proximal end of the heat exchanger. As in heat exchanger 48, it is to be understood that the heat exchanger 82 may be of various configurations, for instance it can be of a dimple-type tubular heat exchanger, a scrape surface-type heat exchanger, or a triple tubular heat exchanger.

Also, as in heat exchanger 48, the heat exchanger 82 is characterized by the use of numerous temperature sensors, including sensors 92 and 94 to sense the inlet and outlet temperatures, respectively, of the cooling medium used in the heat exchanger. Also, one or more sensors, such as sensor 95, can be used to monitor the temperature of the cooling medium within the heat exchanger 82. Temperature sensors 96 and 98 sense the temperature of the food product 15 at the entrance and exit of the heat exchanger 82. Moreover, a plurality of additional temperature sensors 100A, 100B, etc., are positioned along the heat exchanger 82 to sense the temperature of the food product 15 and the cooling medium as it is being cooled by the heat exchanger. In this manner, the entire temperature profile of the food product, as it flows through the heat exchanger 82, may be monitored. In addition, a flow sensor 102 is located adjacent the medium inlet 86 of the heat exchanger 82 to measure the volumetric flow of the coolant through the heat exchanger 82.

From the aseptic sterilizer 16, the sterilized food product 15 is routed to aseptic holding tank 18 or to aseptic filler 20 through a routing network 22. Such routing network includes a line 110 leading from cooling section 46 to a flow diversion valve 112. From the valve 112, the food product flows through line 114 through a 3-way steam supply valve 116. From the valve 116 the sterilized food product flows through a line 128 to a flow valve 130. From the valve 130, the sterilized food product flows through a further line 134 through another valve 124 and then through tank line 126 into the aseptic holding or surge tank 18. During the flow of food product 15 into the aseptic holding tank 18, the food product can be prevented from flowing to the aseptic filler by valve 146 associated therewith. Also, there is positive pressure in line 132. In addition, valve 140 is closed, and a positive pressure exists in line 136.

The aseptic holding tank 18 functions to store the sterilized food product 15 therein, and also to supply such sterilized food product to the aseptic filler 20. The storage tank 18 is charged with sterile air or sterile nitrogen to maintain the stored food product under positive pressure so that it not only flows to the aseptic filler, but also provides back pressure for the sterilization section 16 and the remainder of the system 10 located upstream therefrom. It will be appreciated that other sterile gases may be used in place of nitrogen or air.

Rather than flowing to the aseptic holding tank 18, the sterilized food product 15 may instead flow directly from the aseptic sterilizer 16 to the aseptic filler 20. In this regard, the sterilized food product 15 flows from the cooling section 46 through line 110, through valve 112, through line 114, past 3-way steam supply valve 116, through line 128, through a valve 130, and then through line 132 leading to the aseptic filler 20. During this time the valve 124 is closed so that the food product does not flow to the holding tank 18. The system could be also operated in such a way that the sterilized food product 15 can flow directly from the aseptic sterilizer 16 to either the aseptic filler 20, or the aseptic holding tank 18. In this regard, both 3-way valves, valve 130 and valve 124 are in open position. The sterilized product form line 128 can flow to either the aseptic hold tank or the aseptic filler.

It will be appreciated that the valve 112 serves to isolate the aseptic holding tank and filler from the sterilizer 16. Also, when the food product is flowing either to the aseptic holding tank 18 or the filler 20, steam from source "G" is routed past valve 148, through line 149, through valve 120, and into line 118, thereby forming a steam block in line 118. Condensate from the steam block in line 118 is discharged through steam trap 152. The steam from source "G" is also routed past valve 156 into line 158 and line 166, forming a live steam block to protect the sterilized product 15 flowing through line 114.

It will be appreciated that if any leakage of food product occurs at valve 116, the contact of the food product with steam prevents contamination of the food product from environmental sources, thereby maintaining the sterility of not only the routing network 22, but also the aseptic processing system 10. In this regard, to achieve maximum safety in the present invention, each steam trace is individually monitored through temperature transmitters, with the temperature thereof sent to a programmable logic controller (PLC) (not shown). Also in the present invention, the steam trace may be maintained at a temperature equal to or above the temperature of the product sterilization temperature. If leakage occurs, typically past a valve, and steam flows into the product side or toward the atmosphere (through a valve stem), sterility is not affected because the flow is directed from an aseptic portion of the system 10 towards a non-aseptic portion of the system. If, on the other hand, non-sterile product leaks into a steam trace area because of higher pressure in the food product side, the temperature of the steam barrier will sterilize the leak, thereby avoiding loss of sterility. Of course, when such leaks occur, shut-down of the system 10 likely would be required to repair the leak. The use of steam blocks is particularly helpful in routing network 22 because valves are not foolproof. Even if seals or gaskets are used, food product may still pass by. The same is also true if metal-to-metal contact is used between a valve member and a seat. There will always be small imperfections in the machining of these components at which small leaks may form. Through use of the steam blocks of the present invention the sterility of the aseptic portion of the system 10 is maintained.

When the sterilizer 16 stops production and the sterilized food product 15 is routed to the aseptic filler from the aseptic holding tank 18, the food product flows out of the tank 18 through line 126, past valve 124, through line 134, through valve 130, and then through line 132 to the filler 20. During this process the valve 112 isolates the aseptic holding tank and filler from the sterilizer 16. Also during this time valves 140 and 142 are closed, thereby preventing any flow of food product therethrough. In addition, a steam block is provided in line 114. Such steam is supplied from the source "G" passing through valve 154, through valve 156, line 158, valve 160, line 162, and into line 114. Condensate developed from establishing the steam block in line 114 is discharged through steam trap 164, the condensate reaching the steam trap through valve 160, line 166 and valve 168.

The routing network 22 is also capable of directing the food product from the aseptic sterilizer 16 back to the product feed tank 12, for instance if sterilization of the food product by sterilizer has been completed and the sterilizer is being cleaned. Also, such return flow may occur if it is determined that any one of the scheduled processing parameters is not being met during the sterilization of the food product in the sterilizer 16. With all of the temperature and flow sensors utilized in the sterilizer 16, the present invention is capable of identifying when a monitored parameter, for instance temperature of the food product, does not meet the scheduled value. The present invention is capable of routing such out-of-parameter food product 15 back to the feed tank 12 or to another location. In this regard, the out-of-parameter food product exits cooling section 46 through line 110, passes through valve 112, and then flows through line 150 back through the product feed tank 12. During this time period valves 140 and 142 are closed.

After sterilization of the food product 15 has been completed, it is necessary to clean the product storage tank 12, the pump 14, the aseptic sterilization system 16, and the remainder of the system 10. For the present invention it is possible to clean the tank 10, pump 14, and sterilization system 16 while the aseptic filler 20 is being fed from the aseptic holding tank 18. In this regard, valve 112 is closed so that line 110 is in communication with line 150 and isolated from the aseptic holding tank 18 and the aseptic filler 20 in the manner described above. A cleaning solution, for instance a caustic or acidic liquid, may be routed from storage tank 170 through line 172 to in-feed line 28 leading to tank 12. From the tank 12 the cleaning solution is pumped through the aseptic sterilization section 16 by pump 14, through line 110, through valve 112, and back to the tank 12 through line 150. At some point, the spent cleaning solution is drained off from system 110 for processing and/or disposal.

The system 10 is designed, optimized, operated and monitored in accordance with a validated mathematical model. Such model is used to accurately determine the core temperature of the "worst case" particle flowing through the system. Such particle may be the one that is flowing the fastest through the system and/or the slowest heating particle. Unlike in the processing of canned foods, it is not possible to physically measure the center temperature of particulates flowing through an aseptic processing system. Thus, several math models have been developed in an effort to simulate the center point temperature evolution of the worst case particulate as it flows through the aseptic sterilizing system and the lethality value (F-value) for the worst case particle. The development of such a model is a requirement for FDA's acceptance of aseptic processed low-acid foods with particles the nature of the present invention. Such models include those described in Sastry, Mathematical Evolution of Process Schedules for Aseptic Processing of Low-Acid Foods Containing Discrete Particulates, Journal of Food Science, Vol. 51, No. 5, pp. 1323-1332, 1986; Chandarana, D.I. and Gavin, III, A., Establishing Thermoprocesses for Heterogeneous Foods To Be Processed Aseptically; A Theoretical Comparison of Process Development Methods, Vol. 54, No. 1, pp. 189-204, 1989; Chandarana, D.I., Gavin, III, A., and Wheaton, F.W., Simulation of Parameters for Modeling Aseptic Processing of Foods Containing Particulates, Food Technology, pp. 137-143, 1989; Chang, S.Y. and Toledo, R.T., Heat Transfer and Simulated Sterilization of Particulate Solids in a Continuously Flowing System, Journal of Food Science, Vol. 54, No. 4, pp. 1017-1023 and 1030, 1989.

A further mathematical model will be described in conjunction with the present invention, which utilizes the finite difference methodology for solving the governing transient heat transfer partial differential equations (Eq.1). For modeling the fastest moving 3-dimensional particulate, for example a potato cube in liquid soup, the heat transfer equation can be written as:

$$\rho C_p dT/dt = \nabla * (k * \nabla T) \qquad (1)$$

with the following boundary and initial conditions

$$-k\partial T / \partial \bar{n} = h(Te - Ts) \qquad (2)$$

$$T = T(x,y,z,t) \qquad (3)$$

$$T(x,y,z,0) = T_i \qquad (4)$$

where

T : the particulate temperature
$\nabla$ : gradient, $\nabla \equiv \partial/\partial x i + \partial/\partial y j + \partial/\partial z k$
$T_i$: the initial particulate temperature
$T_s$: the particulate surface temperature
$T_e$: the fluid temperature at residence time t
k : the particulate thermal conductivity (W/m°C)
h : the liquid/particulate convective heat transfer coefficient (W/m$^2$°C).

By solving Equation 1 above, the center or core temperature of the fastest moving particulate in aseptic system 10 can be calculated. With this known core temperature, the lethality value is then calculated according to the following standard equation:

$$F\text{-value} = \int_0^{th} 10^{(T-Tref)/z} dt + \int_{th}^{te} 10^{(T-Tref)/z} dt \qquad (5)$$

where:

T is the core temperature at residence time t

$T_{ref}$ is the reference temperature

z is the thermal characteristic of the target microorganism to be destroyed in the sterilization process.

th is the particle residence time at exit of the holding tube

te is the particle residence time at exit of the cooling section

The cooling lethality usually is not considered (the second term on the right side of Equation 5) when developing an aseptic process. The ISV (or Fs-value) for the fastest particulate flowing through the entire system 10 (heating, holding and cooling) is calculated using the following Equation 6:

$$ISV = \int_0^v \int_0^{th} 10^{(T-Tref)/z} dtdv + \int_0^v \int_{th}^{te} 10^{(T-Tref)/z} dtdv \qquad (6)$$

where v is the volume of the modeled fastest particulate and te here stands for the residence time at the exit of cooling section. The Log Cycle Reduction (LCR) is then calculated based on the following semi-log model:

$$LCR = Log[No/N] = ISV/D_{ref} \qquad (7)$$

The model calculated LCR value of the fastest particulate can then be used to compare the results of the present model for system 10 with microbial challenge results. The model simulation results must agree with the actual microbial challenge results before it can be used for aseptic process development (including process optimization, process control, and process monitoring).

In order to simulate the core temperatures of the fastest particulate in Equations 1-4, the fluid temperature through the multiphase aseptic processing system 10 must first be developed. The following energy balance equation may be used to develop the fluid temperature profile through the entire aseptic system 10:

$$\rho Cp\Delta VdT/dt = U*A(T_e - T_{fm}) + n*s*h*(T_{sm} - T_{fm}) \qquad (8)$$

where

$\rho$ : the density of the liquid product

Cp : the specific heat of the liquid product

$\Delta V$: the control volume of the product flow through at $\Delta t$ seconds interval

U : the overall heat transfer coefficient between heating (or cooling) medium and product for a specific equipment element

A : the total tube surface area of heat transfer within the control volume, $\Delta V$

$T_e$ : the heating or cooling medium temperature at residence time, t

$T_{fm}$: the average fluid temperature of $\Delta V$ volume at residence time, t

n : the total number of particulates in the control volume, $\Delta V$

s : the surface area of an average particulate

h : the particle/liquid convective heat transfer coefficient

$T_{sm}$ : the "average" size particle surface average temperature.

The "average" size particle surface temperature, $T_{sm}$ is calculated by solving the following governing transient heat transfer partial differential equation:

$$\rho CpdT/dt = \nabla*(k*\nabla T) \qquad (9)$$

with the following boundary and initial conditions:

$$-k\partial T / \partial \bar{n} = h(Te - Ts) \qquad (10)$$

$$T = T(x,y,z,t) \qquad (11)$$

$$T(x,y,z,0) = T_i \qquad (12)$$

The definitions for the foregoing equations are the same as for Equations 1-4 set forth above. The simulated particle surface temperatures from Equations 9-12 are then used in Equation 8 to develop the fluid temperature profile of the aseptic processing system 10. Once the fluid temperature profile of the processing system 10 has been developed, the core temperatures of the fastest particulate in the entire aseptic processing system can be simulated using Equations 1-4.

With the foregoing math model, the length of the tubing comprising the holding loop 44 can be calculated and the volume flow rate of the food product 15 through the aseptic sterilizer 16 can be determined. Also, the foregoing model can be utilized to determine the temperature and flow rate of the heating medium in heating section 40 and the cooling medium in cooling section 46. In addition, the foregoing math model can be used to determine the temperature of the food product 15 at each of the temperature sensors 92, 94, 96, 98, 100A, 100B, etc.

An example of the use of the present invention is provided. However, in this example, three swept-surface heat exchanges were used in place of heating section 40, and three swept-heat exchangers are used in cooling section 46.

EXAMPLE 1.

An aseptic processing system very similar to that shown in FIGURE 1 was used to model a low-acid food product containing particulates. Such food product consisted of cream of potato soup concentrate composed of 15% (wt/wt) mixture of diced potato cubes (1.27 x 1.27 x 1.27 cm). A more detailed description of the product is documented in Anonymous, 1996, *Case Study for Condensed Cream of Potato Soup for the Aseptic Process of Multiphase Foods Workshop,* sponsored by NCFST and CAPPS, November 14-15, 1995 and March 12-13, 1996. The data from this workshop was utilized in this example.

Table 1 set forth below shows the modeled fluid temperatures at various locations of the aseptic processing system of this example. The modeling results agree closely with the temperatures measured at the noted locations in the aseptic processing system.

Table 1: Modeled product fluid temperatures of the whole aseptic processing system and measured product fluid temperatures at various locations

| Position | Measured (°C) | Model (°C) |
|---|---|---|
| Enter 1st Heater | 60.0 | 60.0 |
| Enter 2nd Heater | 115.5 | 115.6 |
| Enter 3rd Heater | 132.2 | 132.2 |
| Enter Hold Tube (HT) | 140.5 | 140.7 |
| HT First Qrt. | 140.1 | 140.0 |
| HT Mid | 139.9 | 139.8 |
| HT Third Qrt. | 139.7 | 139.4 |
| HT Exit | 139.5 | 139.1 |
| 1st Cooler | 89.0 | 87.5 |
| 2nd Cooler | 60.5 | 55.7 |
| 3rd Cooler | 39.0 | 37.6 |

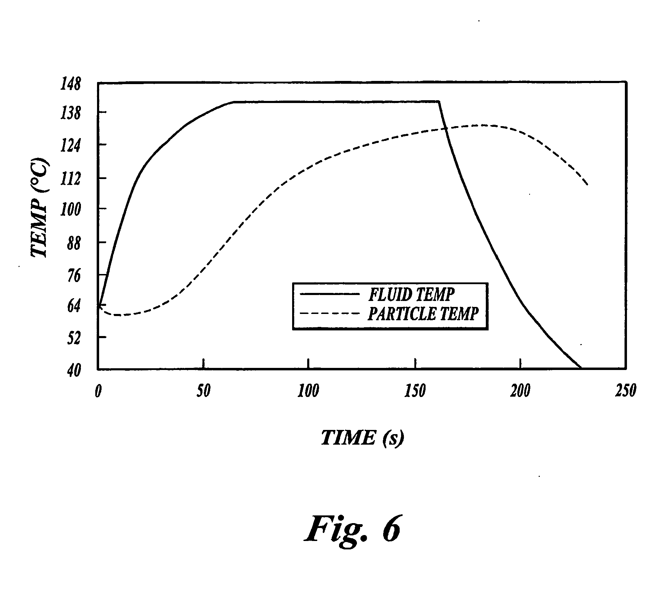

FIGURE 6 shows the modeled center temperature profile of the fastest moving particle in the food product together with the modeled simulated fluid temperature profile throughout the entire aseptic processing system.

Table 2 below shows a validation example of the modeled results against the *Clostridium sporogenes* PA 3679 (Z=11.1°C., $D_{121.1}$ = 1.3 min.) challenge at various process temperatures at the exit of the cooling section 46. The above-discussed model simulated Log Cycle Reduction values (LCR) of *C. sporogenes* PA 3679 spores for the fastest moving potato cube in the system were all above five LCR for those process temperatures above 137.3°C, and were below 5 LCR for three process temperatures below 137.3°C. These results agree with the challenge results of *C. sporogenes* PA 3679 as shown in Table 2. Thus this challenge result validates the accuracy of the mathematical model set forth above. As indicated above, such validated model then can be used to design, optimize, operate and monitor aseptic sterilization system 10.

Table 2. A typical validation example of AseptiCAL simulation results in an aseptic processing system vs. *C. sporogenes* PA 3679 challenge (lethality unit: minutes)

| Process Temp (°C) | Hold Tube | | Whole System | | | Spoilage by PA 3679? |
|---|---|---|---|---|---|---|
| | $F^{11.1}_{121.1}$ | ISV | $F^{11.1}$ 121.1 | ISV | LCR | |
| 139.1 | 3.94 | 6.39 | 10.29 | 11.92 | 9.17 | No (LCR>5) |
| 137.3 | 3.17 | 5.42 | 8.03 | 9.54 | 7.34 | No (LCR>5) |
| 132.2 | 1.63 | 3.30 | 3.78 | 4.93 | 3.79 | Positive |
| 128.5 | 1.03 | 2.33 | 2.23 | 3.15 | 2.42 | Positive |
| 123.1 | 0.52 | 1.37 | 1.03 | 1.66 | 1.28 | Positive |

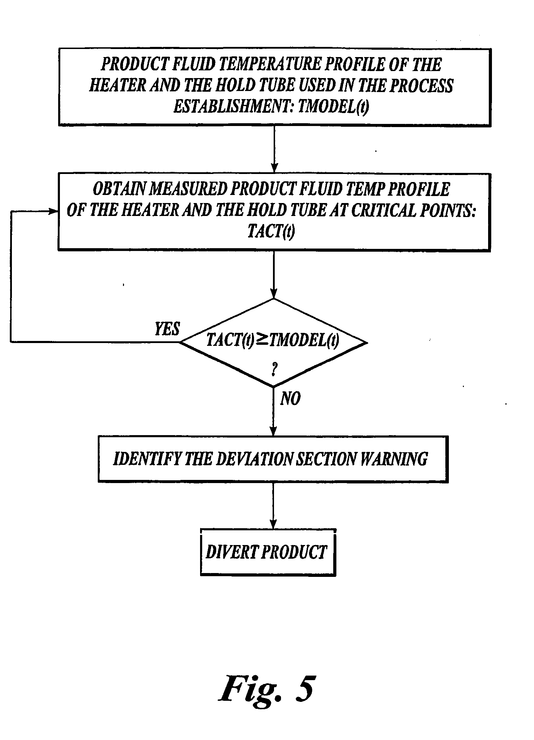

As mentioned above, in the operation of system 10, the temperature of the food product 15 is closely monitored, especially in the heating section 40 and the holding section 44 to make certain that the temperature of the food product is sufficient to achieve the required level of lethality in the food product. In this regard, the temperature of the food product at each of the temperature sensors along the heating section 40 and holding section 44 have been predetermined in accordance with the equations set forth above. If during the aseptic sterilization process the temperature monitored by the temperature sensors is below that required by the modeling used in the process scheduling, the portion of the flowing food product that does not meet the modeled temperature requirement is identified and a warning given to the operator. The warning will allow the operator to check the system operation and parameters to ascertain a reason for the deviation in temperature which has occurred. Moreover, the present invention automatically operates the routing matrix 22 to divert the affected food product away from the aseptic holding tank and/or the aseptic filler by routing such food product to line 150 through valve 112 and back to the feed tank 12 or to another destination. See FIGURE 5, which schematically illustrates the foregoing process.

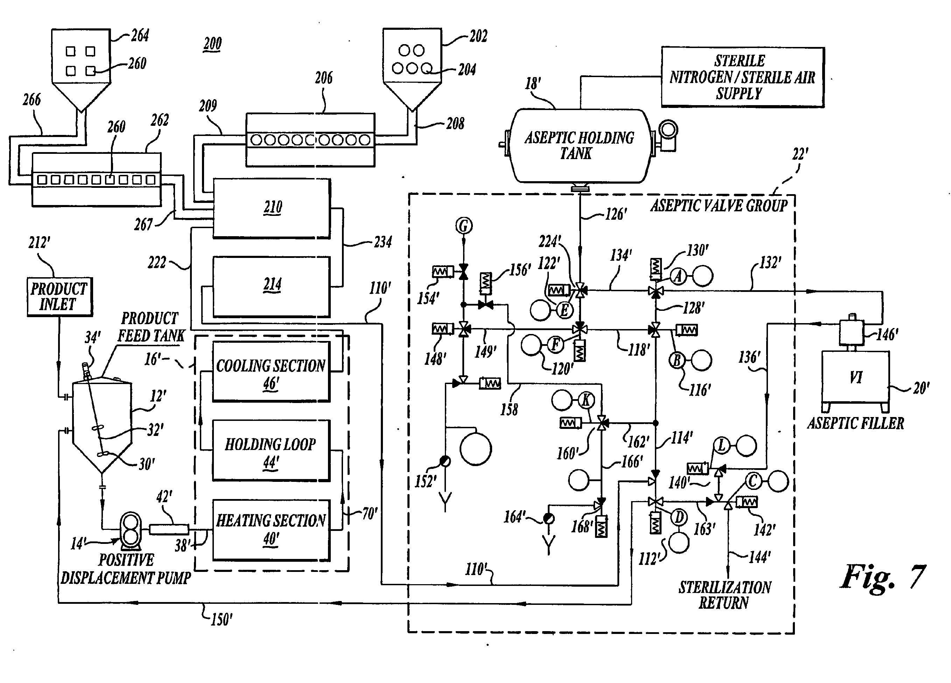

FIGURE 7 illustrates another embodiment of the present invention wherein the food and particulate portions are separately sterilized and then mixed together in a predetermined ratio prior to reaching the aseptic filler. The components of system 200 illustrated in FIGURE 7 that are the same as or similar to those shown in FIGURE 1 are identified by the same reference number, but with the addition of the prime (') designation. FIGURE 7 illustrates system 200 as being composed of a first particulate storage feed tank 202 for storing a first particulate 204 therein. The first particulate 204 is transferred, pumped or otherwise delivered from the storage tank 202 to first sterilizer 206 by a first conveyor or other delivery system 208. The first sterilizer 206 may employ a high temperature, short duration process to sterilize the first particulate in a very rapid manner bearing in mind the required lethality for the "worst case" particle. Every food particle residence time in the first sterilizer 206 is controlled to be the same or nearly the same. In this situation, the worst case particle likely would be the largest particle, or the particle that is slowest to heat at its center or cold spot.

The first sterilizer 206 may be of a traditional type. This system could be an inclined auger system such as the one described in the US Patent 5802961 or a linear belt-conveyor or a vertical spiral belt conveyor system for transferring food particles. Alternatively, the food particles can be directly heated by saturated steam, which typically results in a very high surface heat transfer rate or submerged in other suitable heating medium such as heated water. The food particles 204 may be transported through the first sterilizer 206 on a conveyor belt, an auger system, or other powered transportation system. Such transportation system would provide the same residence time and the same temperature treatment within the first sterilizer for each of the food particles 204. Such residence time would have been calculated previously using standard heat transfer equations, bearing in mind relevant factors including the size and shape of the particulate and their heat transfer coefficients. As an alternative, the first particulates 204 could be transported through the first sterilizer 206 by gravity feed.

From the first sterilizer 206, the treated first particulates 204 are transported by conveyor 209 or other system, such as a transfer valve, to a mixer 210 for mixing with the liquid phase which has been aseptically sterilized and cooled in sterilizer 16'. A predetermined ratio of the sterilized first particulate 204 is mixed with the appropriate volume of liquid in the mixer 210 under aseptic conditions. The sterilized particulate 204 and sterilized liquid 212 are both thoroughly mixed in mixer 210. In addition, the particulate 210 will be at least partially cooled by the cooler liquid in the mixer.

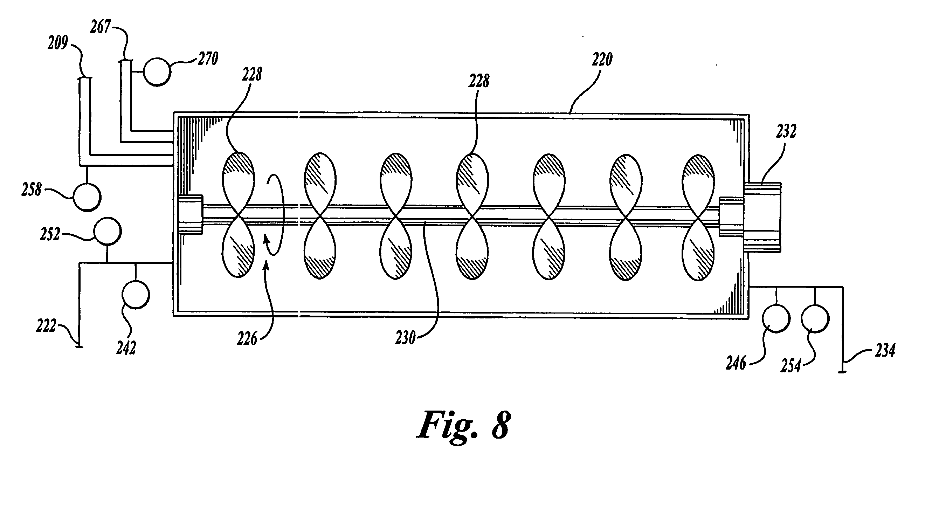

The mixer 210 can be of numerous different constructions. One example of a possible mixer is schematically illustrated in FIGURE 8 as including a chamber 220 for receiving the aseptically sterilized liquid 212 through line 222. The sterilized particulate 204 is routed to the chamber 220 by conveyor or a transfer valve or line 209 or other system. The particulate 204 and liquid 212 are thoroughly mixed in the chamber 220 by a mixing apparatus 226 that may be in the form of a series of mixing blades 228, rotatably mounted on a shaft 230, powered by a motor or other system 232. The mixture of liquid 212 and particulate 204 exits the mixing chamber 220 through line 234, then passes through the cooling section 214, if the product is not sufficiently cooled.

Still referring to FIGURE 8, the mixer 210 may include a number of temperature sensors, such as temperature sensor 242 for measuring the temperature of the liquid 212 entering the mixing chamber 220. A temperature sensor 246 may be located at the outlet of the chamber 220 to measure the temperature of the mixture leaving the chamber through line 234. The mixer 210 may also include a particulate meter or monitor 250 to measure/monitor the quantity of particulate 204 entering the mixer 210. Such measurement device may measure the weight, volume, or other physical attribute of the particulate. Further, a flow meter 252 can be disposed in line 222 at the inlet of the mixing chamber 220 to measure the volumetric flow of the liquid 212 entering the chamber 220. In addition, a flow meter 254 may be disposed at the outlet of the chamber 220 in line 234 to measure the volumetric flow of the mixed, heterogeneous food product leaving the mixer 210. The mixer 220 should be maintained in the aseptic condition. The sterile nitrogen or air can be used to maintain the positive pressure inside vessel 220.

From the mixer 210 the heterogeneous food product may be routed through a cooling section 214 to further cool the mixture to a low enough temperature for aseptic filling of containers. From the cooling section 214 the mixture may be routed to either the aseptic holding tank 18' or aseptic filler 20' through the aseptic routing network 22' in the same manner as described above with respect to system 10. Cooling section 214 may be similar to cooling section 46'. As such, detailed construction of the cooling section 214 will not be repeated here. When a food particle is completely cooled down in the mixer 210, the product can directly flow into the filler 201 or a second aseptic holding tank 18'.

The aseptic system 200 may be designed to incorporate a plurality of different particulates. FIGURE 7 illustrates the sterilization of a second particulate 260, but it is to be understood that still additional particulates may be sterilized and combined with liquid 212 in the mixer 210. The second particulate 260 may be of a different type of food particle from first particulate 204, and thus have a different heat transfer rate so as not to be successfully sterilized in the same sterilizer 206 used for the first particulate. Also, or in addition, the second particulate 260 may have a different initial temperature than the initial temperature of the particulate 204. For example, the second particulate 260 may consist of frozen particles which have the same or different heat transfer rate from the first particulate.

The second particulate 260 is illustrated as sterilized in the second sterilizer 262 operating in parallel with the first sterilizer 206. The particulate 260 may be transferred through the second sterilizer 262 on a conveyor system, through an auger system, by gravity or other appropriate manner. The second particulate 260 may be initially stored in a storage container 264 and then transferred as needed to the second sterilizer 262 through a line or conveyor system 266. The second particulate 260 may be transferred from the second sterilizer 262 to the mixer 210 through conveyor or line 266. As in the first sterilizer 206, the second sterilizer 262 may include a measuring device 270 to measure the weight, volume, or other physical attribute of the sterilized second particulate 260 entering the mixer 210 to verify that the correct mixing ratio was being accomplished.

As mentioned above, other particulates in addition to particulates 204 and 260 may be utilized in conjunction with the present invention. It may be that such other particulates will require their own sterilizer(s) prior to being routed to mixer 210 for mixing with the liquid 212. As also noted above, an advantage of the system 200 is that the particulate component of the heterogeneous mixture can be quickly heated to achieve a required lethality level bearing in mind the "worst case" particle (typically the largest). Moreover, the liquid phase 212 would not have to be retained in the holding section 44' for as long as would be required if particulates were also in the liquid phase within the holding loop 44'. As a consequence, through the present invention, likely both the liquid and solid phases of the food product may be heated more quickly, and reducing the likelihood of overcooking the food product, thereby more likely retaining the color, flavor, and "freshness" of the food product components. As can be understood, the overall quality of the resulting food product can be much higher than traditional "canning" of food product or even sterilizing the food product as a heterogeneous mixture in the aseptic sterilizer 16'.

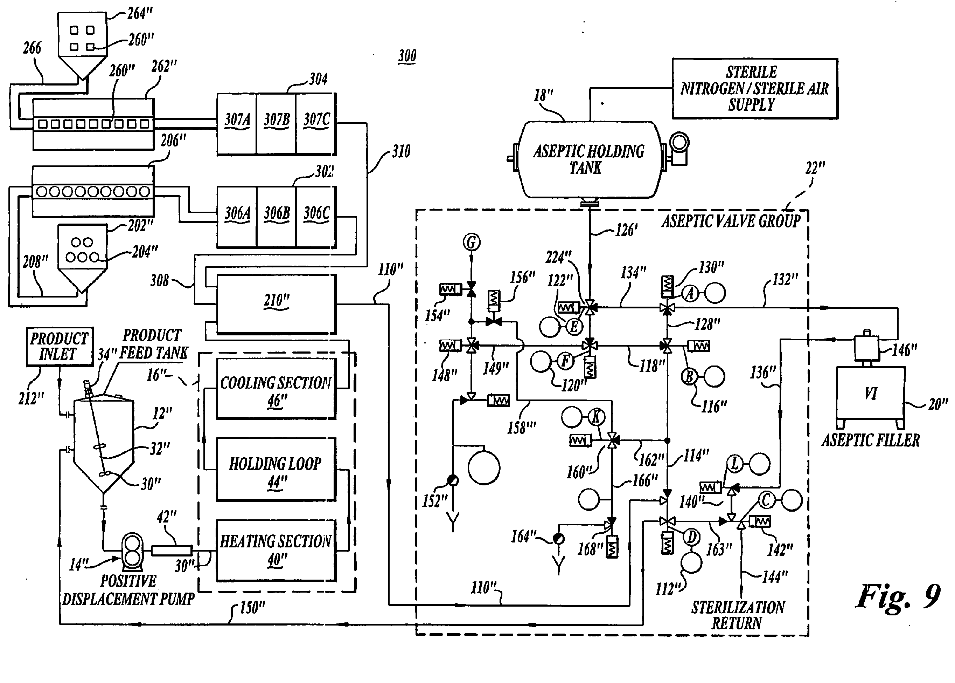

FIGURE 9 illustrates a further embodiment of the present invention whereby sterilizing system 300 is designed to separately sterilize particulates from the liquid phase 212'. In FIGURE 9 the components which are similar to those shown in FIGURE 7 are given the same number, but with a double prime (") designation, and the components that are similar to those shown in FIGURE 1 are given the same part number as in FIGURE 1, but with a double prime (") designation. In general, the system shown in FIGURE 9 differs from that in FIGURE 5 in that the particulates are separately cooled in individual cooling subsystems 302 and 304 before being mixed with the liquid phase 212" in mixer 210", which mixer 210" may be very similar to mixer 210 described above. As such, mixer 210" will not need to be described in detail.

The particulates 204" from sterilizer 206' are cooled in a separate cooling subsystem 302 that can be of various constructions. One such construction may be a vacuum flash cooling system, which are well known in the industry. Such vacuum flash cooling system may include multiple stages, for example, stages 306A, 306B, and 306C. Vacuum is applied to the particulate 204 in each of these stages whereby moisture is rapidly evaporated from the particulate surface thereby quickly cooling the particulate. The vacuum for each of the stages 306A, 306B, and 306C, etc., is controlled so that the integrity of the food particles is properly maintained. In this regard the vacuum in each subsequent stage is stronger than the previous one. The particulate 204" may be transported through the cooling subsystem 302 on a conveyor belt, an auger system, by gravity or other appropriate manner. From the cooling subsystem 302, the sterilized and cooled particulates 204" are transported to mixer 210" through line or conveyor 308 for mixing with the sterilized liquid 212" in a manner similar to that described with respect to sterilization system 200.

As in the sterilization system 200 described above, the sterilization system 300 may also be designed to accommodate a plurality of different particulates that are mixed with the liquid phase 212". As described above, such particulates may be of a different type than particulate 204", may be of a different initial temperature, or may be of a different particle size, or otherwise distinguishable from the particulate 204" so that the protocol for sterilizing the additional particulate(s) may be different than for the first particulate 204'. The second and subsequent particulates may be treated in their own sterilizers. FIGURE 9 illustrates the sterilization of a second particulate 260" in a second sterilizer 262". The sterilized second particulate is then cooled in a second cooling subsystem 304, which may be in construction and operation fairly similar to cooling subsystem 302. As such, the structure and operation of cooling subsystem 304 will not be repeated here, except to mention that the cooling subsystem may also include a flash cooling system having multiple stages, for example, stages 307A, 307B and 307C. From the cooling subsystem 304 the second particulate is routed to mixer 210" through a line or conveyor 310 for mixing with the liquid phase 212". The heterogeneous mixture leaving the mixer 210" is then routed through the routing network 22" to either the aseptic holding tank 18" or to the aseptic filler 20". The routing network 22" in construction and operation may be very similar to the routing network 22", and thus the description of routing network 22' will not be repeated here.

Rather than utilizing individual cooling subsystems 302 and 304, it may be possible to utilize a single cooling subsystem for all of the different particulates that are mixed with the liquid phase 212". It may be that one or more of the particulate types may not have to pass through the entire cooling subsystem, or even if all the particulates pass through the cooling subsystem, it may be satisfactory that some of the particulate types are cooled to a lesser or greater degree than other of the particulate types. In addition, rather than using a mixer 210", it may be satisfactory that the particulates are introduced into the liquid phase 212", for instance, into line 110" using a particulate metering device, which are known in the industry.

It is to be understood that the modeling for aseptic systems 200 and 300 are much more simple than required to model system 10, because the particulates 204, 204', 260 and 260' are heated separately from the liquid phase 212 and 212'. Such modeling equations are well known to those skilled in the art.

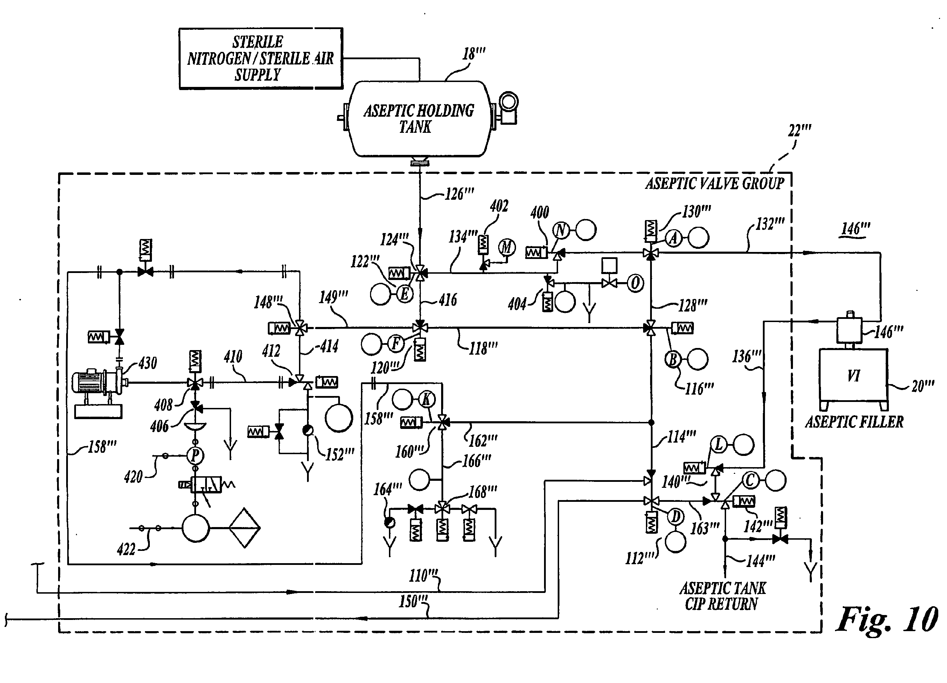

FIGURE 10 illustrates a further embodiment of the present invention, showing another construction for the routing matrix, designated as 22'''. The routing matrix 22''' can be used in conjunction with any of the prior embodiments of the present invention described above. The components of the present invention that are the same or similar to those shown in the prior figures are identified with the same reference number, but with the addition of the triple prime (''') designation. Also, the construction and operation of those portions of routing matrix 22''' that are the same or similar to, or correspond to corresponding components of routing matrices 22, 22' and/or 22", will not be repeated here.

As discussed above with respect to routing matrices 22, 22' and 22", if the aseptic sterilizers 16, 16' or 16" becomes, or is rendered, unsterile, the matrix 22''' is designed to divert the unsterile food product away from the aseptic holding tank 18''' or aseptic filter 20'''. This is accomplished by diverting the unsterile food product through valve 112''' and through line 150''' back to storage tank 12'''. However, if the aseptic filler 20''' is rendered unsterile, the entire matrix has to be isolated from the aseptic holding tank 18'''. In this regard, closing valve 124''' at the aseptic holding tank will preserve the sterility in the holding tank. However, thereafter it is necessary to sterilize line 132'''. During the sterilization process, unsterile water or other sterilizing fluid will have flown by valve 124''', which is in 'closed' position. If a leakage occurs in valve 124''', the sterile food product in tank 18''' could be contaminated. A more serious condition could even occur if chemicals are used to clean line 132, and such chemicals leak past valve 124.

To address this possibility, the embodiment of the present invention shown in FIGURE 10 utilizes an isolation valve 400 positioned in line 132'''. Valves 402 and 404, also in line 132''', are normally in 'closed' position during routing of food product to filler 20'''. Also, these valves are backed by steam to prevent contamination of the line 132''' from the atmosphere.

If the aseptic filler 20''' becomes unsterile, valve 400 is closed and valves 402 and 404 are opened to create a steam block between the aseptic holding tank 18''' and the rest of the matrix. Thereupon the filler line 132''' and the aseptic filler 20''' can be sterilized without contaminating the food product stored in the aseptic holding tank 18'''. After the sterilization has been completed, valve 400 can be re-opened and valves 402 and 404 closed. It will be appreciated that in the embodiment of the present invention shown in FIGURE 10, the lines 132''' and 136''' can be cleaned via the sterilizer, whereas in the previous embodiments of the present invention these lines were cleaned from the aseptic tank.

As another aspect of the present invention shown in FIGURE 10, the routing matrix 22''' permits the holding tank 18''' to be aseptically drained. It may be desirable to fully or partially drain the aseptic holding tank of its food product for various reasons, for example, if the wrong type of product was routed to the holding tank or if too much of a particular product was routed to the holding tank. The sterilization of the food product removed from the holding tank can be maintained. To this end, a modulating valve 406 is positioned in line 408, which in turn is connected to line 410, which in turn is connected to valve 412. Valve 412 is connected to valve 148''' by line 414. As shown in FIGURE 10, line 149''' interconnects valves 148''' and 120'''. Valve 120''' is in turn connected to valve 124''' by a line 416. Lastly, line 126''' interconnects valve 124''' with the aseptic tank 18'''. To aseptically drain the holding tank 18''', the food product flows out through line 126''', through valve 124''', through line 416, through valve 120''', through line 149''', through valve 148''', through line 414, through valve 412, through line 410, through valve 412, through valve 408, and then through the modulating valve 406. Once flowing past valve 406, the aseptic food product may be routed to disposal through high pressure line 420, or through low pressure line 422. Of course, when draining the aseptic holding tank 18''', it is important to maintain sufficient product within the aseptic tank so as to not lose the sterile hydrogen/air head space within the tank.

As a further aspect of the present invention shown in FIGURE 10, when the aseptic holding tank 18'' is cleaned, cleaning solution, water or other fluids accumulate at the bottom of the tank. This fluid is removed through the use of pump 430. In this regard, the fluid is removed from the tank 18'' through the line 126'', valve 124'' (which is closed relative to line 134''), through line 416, through valve 120''', through line 149''', through valve 148''', through line 114, through valve 412, through line 410 to the suction side of pump 430. The pump 430 then sends this fluid through line 158''', through valve 160''', through line 162''' and then through line 116''' through valve 130''', through line 132''', through line 136''', through valve 140''', through valve 142''' to line 144''' to be routed away from the matrix 22'''.

## Claims

1.  A method of administering an aseptic sterilization process to pumpable low acid food products containing a liquid portion and discrete particles comprising a particle portion, the method **characterized by**:

    (a) controlling the aseptic sterilization process to perform aseptic sterilization of the food products according to scheduled parameters determined by a validated model based, at least in part, on the physical characteristics of the food product being sterilized;
    (b) monitoring at least one of the scheduled parameters during the sterilization process;
    (c) determining when a deviation in a specific one of the monitored parameters occurs;
    (d) if a deviation occurs, identifying the portion of the food product associated with such deviation; and
    (e) diverting such identified portion of the food product from the remainder of the food product.

2.  The method of claim 1, wherein the aseptic sterilization process comprises heating a continuous flow of the food product to a desired temperature, routing the continuous flow of food product through a holding apparatus to achieve a desired level of sterilization, and cooling the continuous flow of food product after the desired level of sterilization has been achieved.

3.  The method of claim 2, wherein the scheduled parameter being monitored is the temperature of the food product.

4.  The method of claim 3, wherein the temperature of the food product is monitored at a plurality of different locations during the heating of the food product and during the routing of the food product through the holding apparatus.

5.  The method of claim 4, wherein the temperature of the food product is monitored during the cooling of the food product.

6.  The method of claim 5, wherein the temperature of the food product is also monitored before the cooling of the food product and after the cooling of the food product.

7.  The method of claim 4, wherein the temperature of the food product is also monitored before the heating of the food product, and after the heating of the food product.

8.  The method of claim 7, wherein the temperature of the food product is also monitored before the routing of the food product to the holding apparatus and after the food product has been routed through the holding apparatus.

9. The method of any of the preceding claims, wherein:

the liquid portion separately from the particle portion is heated to a desired temperature in a continuous flow system, routed to the holding apparatus to provide time for a desired level of lethality to be achieved in the liquid portion and then cooled to a desired level;
the particle portion, separate from the liquid portion, is heated to a desired level to achieve a desired lethality level therein; and
the liquid and particle portions are combined together.

10. The method of claim 9, wherein one or both of the liquid portion and particle portion are at least partially cooled prior to the combining of the liquid and particle portions.

11. The method of claim 9, comprising a plurality of particle portions having different heat transfer rates, the plurality of particle portions being heated separately from each other based on their respective heat transfer rates and thereafter combined with the liquid portion.

12. The method of claim 9, wherein the particle portion comprises a plurality of particle portions at different initial temperatures, the plurality of different particle portions being heated based, at least in part, on the initial temperature thereof, and thereafter combined with the liquid portion.

13. The method of claim 9, wherein the particle portion comprises particulates of a plurality of size groups, the size groups preferably being heated separately, and then combined with the liquid portion.

14. The method of claim 9, wherein said particles comprising a plurality of groups of particulates based at least in part on the size of the particulates, the groups being heated separately and then combined with the liquid portion.

15. The method of any of the preceding claims, further comprising directing the aseptically sterilized food product to a routing network to route the food product to either a holding tank or an aseptic filling apparatus, to fill aseptic containers with the sterilized food product, wherein the sterilized food product may alternatively be routed away from the holding tank and aseptic filling apparatus under pre-detennined conditions.

16. The method of claim 15, wherein one such pre-determined condition comprises completion of the aseptic sterilization process, or comprises a monitored deviation in at least one of the monitored parameters.

17. An aseptic sterilization system for food products having particulates in a liquid phase, **characterized by**:

(a) a heating subsystem for heating the food product as such food product continuously flows through the heating subsystem;
(b) a holding subsystem through which the heated food product flows for a selected time interval to achieve a desired lethality in the food product;
(c) a cooling subsystem to cool the flowing food product after a desired level of lethality is achieved;
(d) a control subsystem for controlling the flow of the food product through the heating, holding and cooling subsystems according to scheduled process parameters determined by modeling and based, at least in part, on the physical characteristics of the food product;
(e) a monitoring subsystem for monitoring the heating, holding and cooling of the food product to verify that the heating, holding and cooling of the food product is carried out in accordance with the scheduled parameters and indicating if one of the scheduled parameters is not being met; and
(f) upon detection of a deviation of one of the monitored parameters from its scheduled value, the control system capable of identifying the portion of the food product associated with such deviation and diverting such identified portion of the food product from the remainder of the food product.

18. The aseptic sterilization system according to claim 17, wherein the monitoring subsystem monitors the temperature of the food product being processed within the sterilization system.

19. The aseptic sterilization system according to claim 18, wherein the monitoring subsystem monitors the temperature of the food product while the food product is being heated as well as while the food product is flowing through the holding subsystem.

20. The aseptic sterilization system according to claim 19, wherein the monitoring subsystem monitors the temperature of food product at a plurality of locations during the heating of the food product.

21. The aseptic sterilization system according to claim 19, wherein the monitoring subsystem monitors the temperature of the food product at a plurality of locations during the flow of the food product through the holding subsystem and/or through the cooling subsystem.

22. The aseptic sterilization system according to claim 17, wherein the monitoring subsystem monitors the temperature of the food product during the flow of the food product through the cooling subsystem.

23. The aseptic sterilization system according to claim 17, wherein the heating subsystem comprising a first heating apparatus for the liquid phase of the food product and a separate heating subsystem for the particulates of the food product.

24. The aseptic sterilization system according to claim 23, further comprising a mixing apparatus for mixing the heated liquid phase with the particulates and, preferably, further comprising a second cooling subsystem for cooling the mixed liquid phase and particulates.

25. The apparatus according to claim 23, wherein the heating system for the particulates of the food product comprise a plurality of separate particulate heating units for heating the particulates based on one or more parameters selected from the group consisting of the heat transfer rate of the particulate, the size of the particulate, and the initial temperature of the particulate prior to heating.

26. An aseptic sterilization system for food products having particulates in a liquid phase, **characterized by**:

(a) a first heating subsystem for heating the liquid phase as the liquid phase continuously flows through the heating subsystem;
(b) a holding subsystem through which the heated liquid phase flows for a pre-selected time interval to achieve a desired lethality in the liquid phase;
(c) a second heating subsystem for heating the particulates;
(d) a mixing subsystem for mixing the heated liquid phase and heated particulates;
(e) a cooling subsystem for cooling the liquid phase and particulates;
(f) a control subsystem for controlling the flow of the liquid phase, particulates and mixed liquid phase and particulates through the first heating subsystem, the holding subsystem, the second heating subsystem, and the cooling subsystem, according to scheduled process parameters determined by modeling and based, in part, on the physical characteristics of the food product;
(g) a monitoring subsystem for monitoring the flow of the liquid phase, particulates, and mixed liquid phase and particulates, as well as monitoring a temperature of the liquid phase during heating and holding, the particulates during heating and the mixed liquid phase and particulates in the mixing subsystem and the cooling subsystems; and
(h) upon detection of a deviation of one of the monitored parameters from a scheduled value, the control system identifies a portion of the food products associated with such deviation and diverts such identified portion of the food product from the food product.

27. The aseptic sterilization system according to claim 26, wherein the monitoring subsystem monitors a temperature of the food product during the heating of the food product.

28. The aseptic sterilization system according to claim 17 or 26, wherein the monitoring subsystem comprises a plurality of temperature sensors disposed along the first heating subsystem and the holding subsystem for monitoring the temperature of the liquid phase at a plurality of locations along the first heating subsystem and the holding subsystem.

29. The aseptic sterilization system according to claim 26, wherein the monitoring subsystem comprises a plurality of temperature sensors disposed along the second heating subsystem for monitoring the temperature of the particulates at a plurality of locations along the second heating subsystem.

30. The apparatus according to claim 26, further comprising a second cooling subsystem for cooling the liquid phase of the food product before the liquid phase is mixed with the heated particulates.

31. The aseptic sterilization system according to claim 26, wherein the second heating subsystem for the particulates of the food product comprise a plurality of separate particulate heating units for heating particulates based on one or more parameters selected from the group consisting of the heat transfer rates of the particulates, the size of the particulates, the initial temperature of the particulates prior to heating.

32. The aseptic sterilization system according to claim 17 or 26, wherein the routing subsystem comprising at least one steam block between the flow of food products from the cooling subsystem back to the product feed tank from other portions of the aseptic sterilization system.

33. The aseptic sterilization system according to claim 17 or 26, further comprising an aseptic holding tank in liquid flow communication with the cooling subsystem, and a routing subsystem for routing the food product from the cooling subsystem to the aseptic holding tank.

34. The aseptic sterilization system according to claim 33, further comprising a dispensing subsystem in fluid flow communication with the cooling subsystem and the aseptic holding tank for dispensing the food product, said routing subsystem routing the food product to the dispensing subsystem from the cooling subsystem or the aseptic holding tank.

35. The aseptic sterilization system according to claim 33, wherein the aseptic routing subsystem generating at least one steam block for blocking the flow of the food product from the cooling subsystem to the aseptic holding tank from other subsystems of the aseptic sterilization system.

36. The aseptic sterilization system according to claim 33, wherein said aseptic routing subsystem producing one or more steam blocks for blocking the flow of the food product flowing from the aseptic holding tank to the aseptic filler from other subsystems of the aseptic sterilization system.

37. The aseptic sterilization system according to claim 33, further comprising:

a food product feed tank located upstream from the heating subsystem; and
a bypass return subsystem for directing the food product outputted by the cooling subsystem to the product feed tank rather than to the aseptic holding tank.

38. A method of administering an aseptic sterilization process to pumpable food products having particulates in a liquid phase, the method **characterized by**:

(a) heating a continuous flow of the liquid phase to a desired temperature and routing the continuous flow of the liquid phase through a holding apparatus to achieve a desired level of sterilization within the liquid phase;
(b) heating the particulates to a desired temperature to achieve a desired level of sterilization of the particulates;
(c) mixing the heated liquid phase and heated particulates in a predetermined proportion;
(d) cooling the liquid phase and particulates to a desired temperature;
(e) controlling the heating of the liquid phase and particulates according to parameters determined by modeling based, at least in part, on the physical characteristics of the food product being sterilized; and
(f) monitoring a temperature of the liquid phase at least during the heating and holding thereof and monitoring a temperature of particulates at least during the heating thereof.

39. The method according to claim 38, further comprising:

(a) detecting a deviation of a said temperature;
(b) identifying a portion of the food product associated with such deviation; and
(c) diverting such identified portion from the remainder of the food product.

40. The method according to claim 38, wherein the heated liquid phase is cooled prior to mixing with the heated particulates.

41. The method according to claim 38, comprising separately heating a plurality of particulates having different physical characteristics prior to mixing with the liquid phase; and said physical characteristics selected from the group consisting of different heat transfer rates, different physical sizes, and different initial temperatures.

**42.** The method according to claim 38, further comprising directing the aseptically sterilized food product to a routing network to route the food product to either a holding tank or an aseptic filling apparatus to fill aseptic containers with the sterilized food product, wherein the sterilized food product may alternatively be routed away from the holding tank and aseptic filling apparatus under pre-determined conditions, the method preferably further comprising generating a steam block in the routing network to isolate the sterilized food product from the food product that has not yet been sterilized.

## Patentansprüche

**1.** Verfahren zum Anwenden eines aseptischen Sterilisierungsprozesses auf pumpbare Nahrungsmittelprodukte mit niedriger Säure, die einen Flüssigkeitsanteil und einen Teilchenanteil umfassende diskrete Teilchen enthält, wobei das Verfahren **kennzeichnet ist durch**:

(a) Steuern des aseptischen Sterilisierungsprozesses, um eine aseptische Sterilisation der Nahrungsmittelprodukte gemäß geplanter Parameter, die **durch** ein validiertes Modell bestimmt werden, das wenigstens teilweise auf den physikalischen Eigenschaften des in der Sterilisierung befindlichen Nahrungsmittelproduktes basiert, durchzuführen,
(b) Überwachen wenigstens eines der geplanten Parameter während des Sterilisierungsprozesses,
(c) Feststellen, wenn eine Abweichung in einem bestimmten der überwachten Parameter auftritt,
(d) wenn eine Abweichung auftritt, Identifizieren des Anteils des Lebensmittelproduktes, dem eine solche Abweichung zugeordnet ist, und
(e) Abzweigen des so identifizierten Anteils des Nahrungsmittelproduktes aus dem Rest des Nahrungsmittelproduktes.

**2.** Verfahren nach Anspruch 1, wobei der aseptische Sterilisierungsprozess das Erwärmen eines kontinuierlichen Stromes des Nahrungsmittelproduktes auf eine gewünschte Temperatur, das Leiten der kontinuierlichen Strömung des Nahrungsmittelproduktes durch einen Zwischenspeicherapparat zur Erreichung eines gewünschten Grades der Sterilisation und das Abkühlen des kontinuierlichen Stroms des Nahrungsmittelproduktes, nachdem der gewünschte Grand der Sterilisation erreicht worden ist, beinhaltet.

**3.** Verfahren nach Anspruch 2, wobei der geplante Parameter, der überwacht wird, die Temperatur des Nahrungsmittelproduktes ist.

**4.** Verfahren nach Anspruch 3, wobei die Temperatur des Nahrungsmittelproduktes an mehreren verschiedenen Orten während der Erwärmung des Lebensmittelproduktes und während des Leitens des Lebensmittelproduktes durch den Zwischenspeicherapparat überwacht wird.

**5.** Verfahren nach Anspruch 4, wobei die Temperatur des Nahrungsmittelproduktes während des Abkühlens des Nahrungsmittelproduktes überwacht wird.

**6.** Verfahren nach Anspruch 5, wobei die Temperatur des Nahrungsmittelproduktes auch vor dem Abkühlen des Nahrungsmittelproduktes und nach dem Abkühlen des Nahrungsmittelproduktes überwacht wird.

**7.** Verfahren nach Anspruch 4, wobei die Temperatur des Nahrungsmittelproduktes auch vor dem Erwärmen des Nahrungsmittelproduktes und nach dem Erwärmen des Nahrungsmittelproduktes überwacht wird.

**8.** Verfahren nach Anspruch 7, wobei die Temperatur des Nahrungsmittelproduktes auch vor dem Leiten des Nahrungsmittelproduktes durch den Zwischenspeicherapparat und nach dem Leiten das des Nahrungsmittelproduktes durch den Zwischenspeicherapparat überwacht wird.

**9.** Verfahren nach einem der vorhergehenden Ansprüche, bei dem der flüssige Anteil separat von dem Teilchenanteil in einem kontinuierlichen Strömungssystem auf eine gewünschte Temperatur erwärmt wird, durch den Zwischenspeicherapparat geleitet wird, um Zeit für einen gewünschten, in dem flüssigen Anteil zu erreichenden Letalitätsgrad zu erreichen, und dann auf ein gewünschtes Niveau abgekühlt wird,
der Teilchenanteil getrennt von dem Flüssigkeitsanteil auf ein gewünschtes Niveau erwärmt wird, um darin einen gewünschten Letalitätsgrad zu erreichen, und
die Flüssigkeits- und Teilchenanteile miteinander kombiniert werden.

**10.** Verfahren nach Anspruch 9, bei dem einer oder beide von dem Flüssigkeits- und dem Teilchenanteil vor dem Kombinieren der Flüssigkeits- und Teilchenanteile wenigstens teilweise abgekühlt werden.

**11.** Verfahren nach Anspruch 9, das mehrere Teilchenanteile mit verschiedenen Wärmeübergangszahlen umfasst, wobei die mehreren Teilchenanteile separat voneinander auf Basis ihrer jeweiligen Wärmeübergangszahlen erwärmt werden und danach mit dem Flüssigkeitsanteil kombiniert werden.

**12.** Verfahren nach Anspruch 9, wobei der Teilchenanteil mehrere Teilchenanteile mit verschiedenen Ausgangstemperaturen umfasst, wobei die mehreren verschiedenen Teilchenanteile wenigstens teilweise auf Basis ihrer Ausgangstemperatur erwärmt werden und danach mit dem Flüssigkeitsanteil kombiniert werden.

**13.** Verfahren nach Anspruch 9, wobei der Teilchenanteil eine Mehrzahl von Größengruppen umfasst, wobei die Größengruppen vorzugsweise separat erwärmt werden und dann mit dem Flüssigkeitsanteil kombiniert werden.

**14.** Verfahren nach Anspruch 9, wobei die Teilchen eine Mehrzahl von Teilchengruppen, die wenigstens teilweise auf der Größe der Teilchen basieren, aufweisen, wobei die Gruppen separat erwärmt werden und dann mit dem Flüssigkeitsanteil kombiniert werden.

**15.** Verfahren nach einem der vorhergehenden Ansprüche, bei dem weiter das aseptisch sterilisierte Nahrungsmittelprodukt zu einem Leitnetzwerk geführt wird, um das Nahrungsmittelprodukt entweder zu einem Zwischenspeichertank oder zu einem aseptischen Füllapparat zu leiten, um aseptische Behälter mit dem sterilisierten Nahrungsmittelprodukt zu füllen, wobei das sterilisierte Nahrungsmittelprodukt alternativ unter vorgegebenen Bedingungen von dem Zwischenspeichertank und dem aseptischen Füllapparat abgeleitet werden können.

**16.** Verfahren nach Anspruch 15, wobei eine solche vorgegebene Bedingung den Abschluss des aseptischen Sterilisierungsprozesses umfasst oder eine überwachte Abweichung von wenigstens einem der überwachten Parameter beinhaltet.

**17.** Aseptisches Sterilisierungssystem für Nahrungsmittelprodukte mit Teilchen in einer flüssigen Phase, **gekennzeichnet durch**:

(a) Ein Erwärmungs-Untersystem zum Erwärmen des Nahrungsmittelproduktes, während dieses Nahrungsmittelprodukt kontinuierlich **durch** das Erwärmungs-Untersystem fließt,
(b) ein Zwischenspeicher-Untersystem, **durch** das das erwärmte Nahrungsmittelprodukt für ein ausgewähltes Zeitintervall fließt, um einen erwünschten Letalitätsgrad in dem Nahrungsmittelprodukt zu erreichen,
(c) ein Kühl-Untersystem, um das fließende Nahrungsmittelprodukt abzukühlen, nachdem ein gewünschter Letalitätsgrad erreicht worden ist,
(d) ein Steuer-Untersystem zum Steuern des Flusses des Nahrungsmittelproduktes **durch** die Erwärmungs-, Zwischenspeicher- und Kühl-Untersysteme nach geplanten Prozessparametern, die **durch** Modellbildung festgelegt sind und wenigstens teilweise auf den physikalischen Eigenschaften des Nahrungsmittelproduktes basieren,
(e) ein Überwachungs-Untersystem zum Überwachen der Erwärmung, Zwischenspeicherung und Abkühlung des Nahrungsmittelproduktes, um zu verifizieren, dass das Erwärmen, Zwischenspeichern und Abkühlen des Nahrungsmittelproduktes nach Maßgabe der geplanten Parameter durchgeführt wird, und zum Anzeigen, wenn einer geplanten Parameter nicht erfüllt ist, und
(f) wobei das Steuersystem, auf die Erfassung einer Abweichung eines der überwachten Parameter von seinem geplanten Wert hin, dazu in der Lage ist, den Anteil des Nahrungsmittelproduktes, dem diese Abweichung zugeordnet ist, zu identifizieren und den identifizierten Anteil des Nahrungsmittelproduktes von dem Rest des Nahrungsmittelproduktes abzuzweigen.

**18.** Aseptisches Sterilisierungssystem nach Anspruch 17, wobei das Überwachungs-Untersystem die Temperatur des in dem Sterilisierungssystem prozessierten Nahrungsmittelproduktes überwacht.

**19.** Aseptisches Sterilisierungssystem nach Anspruch 18, wobei das Überwachungs-Untersystem die Temperatur des Nahrungsmittelproduktes überwacht, sowohl während das Nahrungsmittelprodukt erwärmt wird als auch während das Nahrungsmittelprodukt durch das Zwischenspeicher-Untersystem fließt.

20. Aseptisches Sterilisierungssystem nach Anspruch 19, wobei das Überwachungs-Untersystem die Temperatur des Nahrungsmittelproduktes an mehreren Orten während der Erwärmung des Nahrungsmittelproduktes überwacht.

21. Aseptisches Sterilisierungssystem nach Anspruch 19, wobei das Überwachungs-Untersystem die Temperatur des Nahrungsmittelproduktes während des Flusses des Nahrungsmittelproduktes durch das Zwischenspeicher-Untersystem und/oder durch das Kühl-Untersystem an mehreren Orten überwacht.

22. Aseptisches Sterilisierungssystem nach Anspruch 17, wobei das Überwachungs-Untersystem die Temperatur des Nahrungsmittelproduktes überwacht, während das Nahrungsmittelprodukt durch das Kühl-Untersystem fließt.

23. Aseptisches Sterilisierungssystem nach Anspruch 17, wobei das Erwärmungs-Untersystem einen ersten Erwärmungsapparat für die flüssige Phase des Nahrungsmittelproduktes und ein separates Erwärmungs-Untersystem für die Teilchen des Nahrungsmittelproduktes aufweist.

24. Aseptisches Sterilisierungssystem nach Anspruch 23, das weiter einen Mischapparat zum Mischen der erwärmten flüssigen Phase mit den Teilchen und vorzugsweise weiter ein zweites Kühl-Untersystem zum Abkühlen der gemischten flüssigen Phase und Teilchen aufweist.

25. Apparat nach Anspruch 23, wobei das Erwärmungs-Untersystem für die Teilchen des Nahrungsmittelproduktes eine Mehrzahl von separaten Teilchen-Erwärmungseinheiten für die Erwärmung der Teilchen auf Basis von einem oder mehreren Parametern aufweist, die aus der Gruppe bestehend aus der Wärmeübergangszahl des Teilchens, der Größe des Teilchens und der Anfangstemperatur des Teilchens vor der Erwärmung ausgewählt sind.

26. Aseptisches Sterilisierungssystem für Nahrungsmittelprodukte mit Teilchen in einer flüssigen Phase, **gekennzeichnet durch**

(a) ein erstes Erwärmungs-Untersystem zum Erwärmen der flüssigen Phase, während die flüssige Phase kontinuierlich durch das Erwärmungs-Untersystem fließt,
(b) ein Zwischenspeicher-Untersystem, **durch** das die erwärmte flüssige Phase für ein vorgegebenes Zeitintervall fließt, um eine gewünschte Letalität in der flüssigen Phase zu erreichen,
(c) ein zweites Erwärmungs-Untersystem zum Erwärmen der Teilchen,
(d) ein Misch-Untersystem zum Mischen der erwärmten flüssigen Phase und der erwärmten Teilchen,
(e) ein Kühl-Untersystem zum Abkühlen der flüssigen Phase und der Teilchen,
(f) ein Steuer-Untersystem zum Steuern des Flusses der flüssigen Phase, der Teilchen und der gemischten flüssigen Phase und Teilchen **durch** das erste Erwärmungs-Untersystem, das Zwischenspeicher-Untersystem, das zweite Erwärmungs-Untersystem und das Kühl-Untersystem gemäß geplanter Prozessparameter, die **durch** Modellbildung festgelegt sind und wenigstens teilweise auf den physikalischen Eigenschaften des Nahrungsmittelproduktes basieren,
(g) einem Überwachungs-Untersystem zum Überwachen des Flusses der flüssigen Phase, der Teilchen und der gemischten flüssigen Phase und Teilchen und zum Überwachen einer Temperatur der flüssigen Phase während der Erwärmung und Zwischenspeicherung, einer Temperatur der Teilchen während der Erwärmung und einer Temperatur der gemischten flüssigen Phase und Teilchen in dem Misch-Untersystem und den Kühl-Untersystemen, und
(h) wobei das Steuersystem, auf die Erfassung einer Abweichung eines der überwachten Parameter von einem geplanten Wert, einen Anteil der Nahrungsmittelprodukte, dem diese Abweichung zugeordnet ist, identifiziert und den so identifizierten Anteil des Nahrungsmittelproduktes aus dem Nahrungsmittelprodukt abzweigt.

27. Aseptisches Sterilisierungssystem nach Anspruch 26, wobei das Überwachungs-Untersystem eine Temperatur des Nahrungsmittelproduktes während der Erwärmung des Nahrungsmittelproduktes überwacht.

28. Aseptisches Sterilisierungssystem nach Anspruch 17 oder 26, wobei das Überwachungs-Untersystem mehrere Temperatursensoren aufweist, die entlang des Erwärmungs-Untersystem und des Zwischenspeicher-Untersystems angeordnet sind, um die Temperatur der flüssigen Phase an mehreren Orten entlang des ersten Erwärmungs-Untersystems und des Zwischenspeicher-Untersystems zu überwachen.

29. Aseptisches Sterilisierungssystem nach Anspruch 26, wobei das Überwachungs-Untersystem mehrere Temperatursensoren aufweist, die entlang des zweiten Erwärmungs-Untersystems angeordnet sind, um die Temperatur der Teilchen an mehreren Orten entlang des zweiten Erwärmungs-Untersystems zu überwachen.

30. Apparat nach Anspruch 26, der weiter ein zweites Kühl-Untersystem zum Abkühlen der flüssigen Phase des Nahrungsmittelproduktes aufweist, bevor die flüssige Phase mit den erwärmten Teilchen gemischt wird.

31. Aseptisches Sterilisierungssystem nach Anspruch 26, wobei das zweite Erwärmungs-Untersystem für die Teilchen des Nahrungsmittelproduktes eine Mehrzahl von separaten Teilchen-Erwärmungseinheiten zum Erwärmen von Teilchen auf Basis von einem oder mehreren Parametern aufweist, die aus der Gruppe bestehend aus den Wärmeübergangszahlen der Teilchen, der Größe der Teilchen, der Anfangstemperatur der Teilchen vor der Erwärmung ausgewählt sind.

32. Aseptisches Sterilisierungssystem nach Anspruch 17 oder 26, wobei das Leit-Untersystem wenigstens eine Dampfsperre zwischen dem Strom der Nahrungsmittelprodukte von dem Kühl-Untersystem zurück zu dem Produktzufuhrtank gegenüber anderen Bereichen des aseptischen Sterilisierungssystems.

33. Aseptisches Sterilisierungssystem nach Anspruch 17 oder 26, das weiter einen aseptischen Zwischenspeichertank in Flüssigkeitsströmungsverbindung mit dem Kühl-Untersystem und ein Leit-Untersystem zum Leiten des Nahrungsmittelproduktes von dem Kühl-Untersystem zu dem aseptischen Zwischenspeichertank aufweist.

34. Aseptisches Sterilisierungssystem nach Anspruch 33, das weiter ein Abgabe-Untersystem in Flüssigkeitsströmungsverbindung mit dem Kühl-Untersystem und dem aseptischen Zwischenspeichertank zum Abgeben des Nahrungsmittelproduktes aufweist, wobei das Leit-Untersystem das Nahrungsmittelprodukt von dem Kühl-Untersystem oder dem aseptischen Zwischenspeichertank zu dem Abgabe-Untersystem leitet.

35. Aseptisches Sterilisierungssystem nach Anspruch 33, wobei das aseptische Leit-Untersystem wenigstens eine Dampfsperre erzeugt, um den Strom des Nahrungsmittelproduktes von dem Kühl-Untersystem zu dem aseptischen Zwischenspeichertank gegenüber anderen Untereinheiten des aseptischen Sterilisierungssystems abzuschirmen.

36. Aseptisches Sterilisierungssystem nach Anspruch 33, wobei das aseptische Leit-Untersystem eine oder mehrere Dampfsperren erzeugt, um den Strom des Nahrungsmittelproduktes aus dem aseptischen Zwischenspeichertank zu der aseptischen Füllvorrichtung gegenüber anderen Untereinheiten des aseptischen Sterilisierungssystems abzuschirmen.

37. Aseptisches Sterilisierungssystem nach Anspruch 33, das weiter aufweist:

Einen Nahrungsmittelproduktzufuhrtank, der stromaufwärts des Erwärmungs-Untersystems angeordnet ist, und ein überbrückendes Rückführ-Untersystem zum Lenken des Nahrungsmittelproduktes, das von dem Kühl-Untersystems ausgegeben wird, zu dem Produktzufuhrtank anstatt zu dem aseptischen Zwischenspeichertank.

38. Verfahren zum Anwenden eines aseptischen Sterilisierungsprozesses auf pumpbare Nahrungsmittelprodukte mit Teilchen in einer flüssigen Phase, wobei das Verfahren **gekennzeichnet ist durch**:

(a) Erwärmen eines kontinuierlichen Stromes der flüssigen Phase auf eine gewünschte Temperatur und Leiten des kontinuierlichen Stromes der flüssigen Phase **durch** einen Zwischenspeicherapparat, um einen gewünschten Sterilisationsgrad innerhalb der flüssigen Phase zu erreichen,
(b) Erwärmen der Teilchen auf eine gewünschte Temperatur, um einen gewünschten Sterilisationsgrad der Teilchen zu erreichen,
(c) Mischen der erwärmten flüssigen Phase und der erwärmten Teilchen in einem vorgegebenen Verhältnis,
(d) Abkühlen der flüssigen Phase und der Teilchen auf eine gewünschte Temperatur,
(e) Steuern der Erwärmung der flüssigen Phase und der Teilchen gemäß Parametern, die **durch** Modellbildung wenigstens teilweise auf Basis von physikalischen Eigenschaften des sterilisierten Nahrungsmittelproduktes festgelegt sind, und
(f) Überwachen einer Temperatur der flüssigen Phase wenigstens während deren Erwärmung und Zwischenspeicherung und Überwachen einer Temperatur der Teilchen wenigstens während deren Erwärmung.

39. Verfahren nach Anspruch 38, bei dem weiter:

(a) Eine Abweichung der Temperatur detektiert wird,

(b) ein Anteil des Nahrungsmittelproduktes, dem diese Abweichung zugeordnet ist, identifiziert wird, und

(c) dieser identifizierte Anteil von dem Rest des Nahrungsmittelproduktes abgezweigt wird.

**40.** Verfahren nach Anspruch 38, wobei die erwärmte flüssige Phase vor dem Mischen mit den erwärmten Teilchen abgekühlt wird.

**41.** Verfahren nach Anspruch 38, bei dem eine Mehrzahl von Teilchen mit unterschiedlichen physikalischen Eigenschaften vor dem Mischen mit der flüssigen Phase separat erwärmt werden, wobei die physikalischen Eigenschaften aus der Gruppe bestehend aus unterschiedlichen Wärmeübergangszahlen, unterschiedlichen physikalischen Größen und unterschiedlichen Anfangstemperaturen ausgewählt sind.

**42.** Verfahren nach Anspruch 38, bei dem weiter das aseptisch sterilisierte Nahrungsmittelprodukt zu einem Leit-Netzwerk geführt wird, um das Nahrungsmittelprodukt entweder zu einem Zwischenspeichertank oder einem aseptischen Füllapparat zu leiten, um aseptische Behälter mit dem sterilisierten Nahrungsmittelprodukt zu füllen, wobei das sterilisierte Nahrungsmittelprodukt alternativ unter vorgegebenen Bedingungen weg von dem Zwischenspeichertank und dem aseptischen Füllapparat geleitet werden kann, wobei das Verfahren vorzugsweise auch das Erzeugen einer Dampfsperre in dem Netzwerk beinhaltet, um das sterilisierte Nahrungsmittelprodukt von dem Nahrungsmittelprodukt, das noch nicht sterilisiert worden ist, zu isolieren.

**Revendications**

**1.** - Procédé d'application d'un processus de stérilisation aseptique à des produits alimentaires à faible teneur en acide, aptes à être pompés, contenant une partie liquide et des particules discrètes comprenant une partie de particules, le procédé étant **caractérisé par** :

(a) le contrôle du processus de stérilisation aseptique pour effectuer une stérilisation aseptique des produits alimentaires selon des paramètres programmés déterminés par un modèle validé basé, au moins en partie, sur les caractéristiques physiques du produit alimentaire qui est stérilisé ;

(b) la surveillance d'au moins l'un des paramètres programmés pendant le processus de stérilisation ;

(c) la détermination du moment où une déviation dans l'un spécifique des paramètres surveillés se produit ;

(d) si une déviation se produit, l'identification de la partie du produit alimentaire associée à une telle déviation ; et

(e) le détournement d'une telle partie identifiée du produit alimentaire du reste du produit alimentaire.

**2.** - Procédé selon la revendication 1, dans lequel le processus de stérilisation aseptique comprend le chauffage d'un écoulement continu du produit alimentaire jusqu'à une température désirée, l'acheminement de l'écoulement continu de produit alimentaire à travers un appareil de retenue pour atteindre un taux désiré de stérilisation, et le refroidissement de l'écoulement continu de produit alimentaire après que le taux de stérilisation désiré ait été atteint.

**3.** - Procédé selon la revendication 2, dans lequel le paramètre programmé qui est surveillé est la température du produit alimentaire.

**4.** - Procédé selon la revendication 3, dans lequel la température du produit alimentaire est surveillée à une pluralité d'emplacements différents pendant le chauffage du produit alimentaire et pendant l'acheminement du produit alimentaire à travers l'appareil de retenue.

**5.** - Procédé selon la revendication 4, dans lequel la température du produit alimentaire est surveillée pendant le refroidissement du produit alimentaire.

**6.** - Procédé selon la revendication 5, dans lequel la température du produit alimentaire est également surveillée pendant le refroidissement du produit alimentaire et après le refroidissement du produit alimentaire.

**7.** - Procédé selon la revendication 4, dans lequel la température du produit alimentaire est également surveillée pendant le chauffage du produit alimentaire, et après le chauffage du produit alimentaire.

**8.** - Procédé selon la revendication 7, dans lequel la température du produit alimentaire est également surveillée avant l'acheminement du produit alimentaire dans l'appareil de retenue et après que le produit alimentaire ait été acheminé à travers l'appareil de retenue.

9. - Procédé selon l'une quelconque des revendications précédentes, dans lequel :

   - la partie liquide séparément de la partie de particules est chauffée jusqu'à une température désirée dans un système à écoulement continu, acheminée dans l'appareil de retenue pour fournir du temps pour un taux de létalité désiré devant être atteint dans la partie liquide, puis refroidie jusqu'à un niveau désiré ;
   - la partie de particules, séparée de la partie liquide, est chauffée jusqu'à un niveau désiré pour atteindre un taux de létalité désiré dans celle-ci ; et
   - les parties liquide et de particules sont combinées ensemble.

10. - Procédé selon la revendication 9, dans lequel l'une ou les deux parmi la partie liquide et la partie de particules sont au moins partiellement refroidies avant la combinaison des parties liquide et de particules.

11. - Procédé selon la revendication 9, comprenant une pluralité de parties de particules ayant différentes vitesses de transfert de chaleur, la pluralité de parties de particules étant chauffées séparément les unes des autres sur la base de leurs vitesses de transfert de chaleur respectives, puis combinées avec la partie liquide.

12. - Procédé selon la revendication 9, dans lequel la partie de particules comprend une pluralité de parties de particules à différentes températures initiales, la pluralité de différentes parties de particules étant chauffées sur la base, au moins en partie, de la température initiale de celles-ci, puis combinées avec la partie liquide.

13. - Procédé selon la revendication 9, dans lequel la partie de particules comprend des particules d'une pluralité de groupes de dimension, les groupes de dimension étant, de préférence, chauffés séparément, puis combinés avec la partie liquide.

14. - Procédé selon la revendication 9, dans lequel lesdites particules comprennent une pluralité de groupes de particules sur la base au moins en partie de la dimension des particules, les groupes étant chauffés séparément, puis combinés avec la partie liquide.

15. - Procédé selon l'une quelconque des revendications précédentes, comprenant en outre la conduite du produit alimentaire stérilisé de façon aseptique dans un réseau d'acheminement pour acheminer le produit alimentaire soit dans un réservoir de retenue, soit dans un appareil de remplissage aseptique, pour remplir des conteneurs aseptiques par le produit alimentaire stérilisé, le produit alimentaire stérilisé pouvant en variante être acheminé loin du réservoir de retenue et de l'appareil de remplissage aseptique dans des conditions prédéterminées.

16. - Procédé selon la revendication 15, dans lequel une telle condition prédéterminée comprend l'achèvement du processus de stérilisation aseptique, ou comprend une déviation surveillée dans au moins l'un des paramètres surveillés.

17. - Système de stérilisation aseptique pour des produits alimentaires ayant des particules dans une phase liquide, **caractérisé par** :

   (a) un sous-système de chauffage pour chauffer le produit alimentaire à mesure qu'un tel produit alimentaire s'écoule en continu à travers le sous-système de chauffage ;
   (b) un sous-système de retenue à travers lequel le produit alimentaire chauffé s'écoule pendant un intervalle de temps sélectionné pour atteindre une létalité désirée dans le produit alimentaire ;
   (c) un sous-système de refroidissement pour refroidir le produit alimentaire s'écoulant après qu'un taux de létalité désiré est atteint ;
   (d) un sous-système de contrôle pour contrôler l'écoulement du produit alimentaire à travers les sous-systèmes de chauffage, retenue et refroidissement selon des paramètres de procédé programmés déterminés par modélisation et basés, au moins en partie, sur les caractéristiques physiques du produit alimentaire ;
   (e) un sous-système de surveillance pour surveiller le chauffage, la retenue et le refroidissement du produit alimentaire pour vérifier que le chauffage, la retenue et le refroidissement du produit alimentaire sont effectués selon les paramètres programmés et indiquant si l'un des paramètres programmés n'est pas satisfait; et
   (f) lors de la détection d'une déviation de l'un des paramètres programmés à partir de sa valeur programmée, le système de contrôle est capable d'identifier la partie du produit alimentaire associée à une telle déviation et de dévier une telle partie identifiée du produit alimentaire à partir du reste du produit alimentaire.

**18.** - Système de stérilisation aseptique selon la revendication 17, dans lequel le sous-système de surveillance surveille la température du produit alimentaire qui est traité à l'intérieur du système de stérilisation.

**19.** - Système de stérilisation aseptique selon la revendication 18, dans lequel le sous-système de surveillance surveille la température du produit alimentaire tandis que le produit alimentaire est en train d'être chauffé, ainsi que tandis que le produit alimentaire est en train de s'écouler à travers le sous-système de retenue.

**20.** - Système de stérilisation aseptique selon la revendication 19, dans lequel le sous-système de surveillance surveille la température du produit alimentaire à une pluralité d'emplacements pendant le chauffage du produit alimentaire.

**21.** - Système de stérilisation aseptique selon la revendication 19, dans lequel le sous-système de surveillance surveille la température du produit alimentaire à une pluralité d'emplacements pendant l'écoulement du produit alimentaire à travers le sous-système de retenue et/ou à travers le sous-système de refroidissement.

**22.** - Système de stérilisation aseptique selon la revendication 17, dans lequel le sous-système de surveillance surveille la température du produit alimentaire pendant l'écoulement du produit alimentaire à travers le sous-système de refroidissement.

**23.** - Système de stérilisation aseptique selon la revendication 17, dans lequel le sous-système de chauffage comprend un premier appareil de chauffage pour la phase liquide du produit alimentaire et un sous-système de chauffage séparé pour les particules du produit alimentaire.

**24.** - Système de stérilisation aseptique selon la revendication 23, comprenant en outre un appareil de mélange pour mélanger la phase liquide chauffée avec les particules et, de préférence, comprenant en outre un second sous-système de refroidissement pour refroidir la phase liquide et les particules mélangées.

**25.** - Appareil selon la revendication 23, dans lequel le système de chauffage pour les particules du produit alimentaire comprend une pluralité d'unités séparées de chauffage des particules pour chauffer les particules sur la base d'un ou plusieurs paramètres choisis dans le groupe constitué par le taux de transfert de chaleur de la particule, la dimension de la particule, et la température initiale de la particule avant le chauffage.

**26.** - Système de stérilisation aseptique pour des produits alimentaires ayant des particules dans une phase liquide, **caractérisé par** :

(a) un premier sous-système de chauffage pour chauffer la phase liquide à mesure que la phase liquide s'écoule en continu à travers le sous-système de chauffage ;
(b) un sous-système de retenue à travers lequel la phase liquide chauffée s'écoule pendant un intervalle de temps présélectionné pour atteindre une létalité désirée dans la phase liquide ;
(c) un second sous-système de chauffage pour chauffer les particules ;
(d) un sous-système de mélange pour mélanger la phase liquide chauffée et les particules chauffées ;
(e) un sous-système de refroidissement pour refroidir la phase liquide et les particules ;
(f) un sous-système de contrôle pour contrôler l'écoulement de la phase liquide, des particules, et de la phase liquide et des particules mélangées, à travers le premier sous-système de chauffage, le sous-système de retenue, le second sous-système de chauffage et le sous-système de refroidissement, selon des paramètres de procédé programmés déterminés par modélisation et basés, en partie, sur les caractéristiques physiques du produit alimentaire ;
(g) un sous-système de surveillance pour surveiller l'écoulement de la phase liquide, des particules, et de la phase liquide et des particules mélangées, ainsi que pour surveiller une température de la phase liquide pendant le chauffage et la retenue, les particules pendant le chauffage, et la phase liquide et les particules mélangées dans le sous-système de mélange et les sous-systèmes de refroidissement ; et
(h) lors de la détection d'une déviation de l'un des paramètres surveillés à partir d'une valeur programmée, le système de contrôle identifie une partie des produits alimentaires associée à une telle déviation et dévie une telle partie identifiée du produit alimentaire à partir du produit alimentaire.

**27.** - Système de stérilisation aseptique selon la revendication 26, dans lequel le sous-système de surveillance surveille une température du produit alimentaire pendant le chauffage du produit alimentaire.

**28.** - Système de stérilisation aseptique selon l'une des revendications 17 ou 26, dans lequel le sous-système de surveillance comprend une pluralité de détecteurs de température disposés le long du premier sous-système de chauffage et du sous-système de retenue pour surveiller la température de la phase liquide à une pluralité d'emplacements le long du premier sous-système de chauffage et du sous-système de retenue.

**29.** - Système de stérilisation aseptique selon la revendication 26, dans lequel le sous-système de surveillance comprend une pluralité de détecteurs de température disposés le long du second sous-système de chauffage pour surveiller la température des particules à une pluralité d'emplacements le long du second sous-système de chauffage.

**30.** - Appareil selon la revendication 26, comprenant en outre un second sous-système de refroidissement pour refroidir la phase liquide du produit alimentaire avant que la phase liquide ne soit mélangée avec les particules chauffées.

**31.** - Système de stérilisation aseptique selon la revendication 26, dans lequel le second sous-système de chauffage pour les particules du produit alimentaire comprend une pluralité d'unités de chauffage de particules séparées pour chauffer les particules sur la base d'un ou plusieurs paramètres choisis dans le groupe constitué par les taux de transfert de chaleur des particules, la dimension des particules, la température initiale des particules avant le chauffage.

**32.** - Système de stérilisation aseptique selon l'une des revendications 17 ou 26, dans lequel le sous-système d'acheminement comprend au moins un bloc de vapeur d'eau entre l'écoulement des produits alimentaires en provenance du sous-système de refroidissement en retour au réservoir d'alimentation en produit à partir d'autres parties du système de stérilisation aseptique.

**33.** - Système de stérilisation aseptique selon l'une des revendications 17 ou 26, comprenant en outre un réservoir de retenue aseptique en communication d'écoulement liquide avec le sous-système de refroidissement, et un sous-système d'acheminement pour acheminer le produit alimentaire du sous-système de refroidissement au réservoir de retenue aseptique.

**34.** - Système de stérilisation aseptique selon la revendication 33, comprenant en outre un sous-système de distribution en communication d'écoulement fluide avec le sous-système de refroidissement et le réservoir de retenue aseptique pour distribuer le produit alimentaire, ledit sous-système d'acheminement acheminant le produit alimentaire au sous-système de distribution à partir du sous-système de refroidissement ou du réservoir de retenue aseptique.

**35.** - Système de stérilisation aseptique selon la revendication 33, dans lequel le sous-système d'acheminement aseptique génère au moins un bloc de vapeur d'eau pour bloquer l'écoulement du produit alimentaire du sous-système de refroidissement au réservoir de retenue aseptique à partir d'autres sous-systèmes du système de stérilisation aseptique.

**36.** - Système de stérilisation aseptique selon la revendication 33, dans lequel ledit sous-système d'acheminement aseptique produit un ou plusieurs blocs de vapeur d'eau pour bloquer l'écoulement du produit alimentaire s'écoulant du réservoir de retenue aseptique à l'appareil de remplissage aseptique à partir d'autres sous-systèmes du système de stérilisation aseptique.

**37.** - Système de stérilisation aseptique selon la revendication 33, comprenant en outre :

   - un réservoir d'alimentation en produit alimentaire situé en amont du sous-système de chauffage ; et
   - un sous-système de retour de contournement pour diriger le produit alimentaire sorti par le sous-système de refroidissement dans le réservoir d'alimentation en produit plutôt que dans le réservoir de retenue aseptique.

**38.** - Procédé d'administration d'un procédé de stérilisation aseptique à des produits alimentaires aptes à être pompés ayant des particules dans une phase liquide, le procédé étant **caractérisé par** :

   (a) le chauffage d'un écoulement continu de la phase liquide jusqu'à une température désirée et l'acheminement de l'écoulement continu de la phase liquide à travers un appareil de retenue pour atteindre un taux de stérilisation désiré à l'intérieur de la phase liquide ;
   (b) le chauffage des particules jusqu'à une température désirée pour atteindre un niveau de stérilisation désiré des particules ;
   (c) le mélange de la phase liquide chauffée et des particules chauffées dans une proportion prédéterminée ;
   (d) le refroidissement de la phase liquide et des particules jusqu'à une température désirée ;

(e) le contrôle du chauffage de la phase liquide et des particules selon des paramètres déterminés par modélisation basés, au moins en partie, sur les caractéristiques physiques du produit alimentaire qui est stérilisé ; et

(f) la surveillance d'une température de la phase liquide au moins pendant le chauffage et la retenue de celle-ci et la surveillance d'une température des particules au moins pendant le chauffage de celles-ci.

**39.** - Procédé selon la revendication 38, comprenant en outre :

(a) la détection d'une déviation d'une température précitée ;
(b) l'identification d'une partie du produit alimentaire associée à une telle déviation ; et
(c) la déviation d'une telle partie identifiée du reste du produit alimentaire.

**40.** - Procédé selon la revendication 38, dans lequel la phase liquide chauffée est refroidie avant d'être mélangée avec les particules chauffées.

**41.** - Procédé selon la revendication 38, comprenant le chauffage séparé d'une pluralité de particules ayant différentes caractéristiques physiques avant de les mélanger avec la phase liquide ; et lesdites caractéristiques physiques sont choisies dans le groupe constitué par différents taux de transfert de chaleur, différentes dimensions physiques et différentes températures initiales.

**42.** - Procédé selon la revendication 38, comprenant en outre la conduite du produit alimentaire stérilisé de façon aseptique dans un réseau d'acheminement pour acheminer le produit alimentaire soit dans un réservoir de retenue, soit dans un appareil de remplissage aseptique pour remplir des conteneurs aseptiques par le produit alimentaire stérilisé, le produit alimentaire stérilisé pouvant, en variante, être acheminé loin du réservoir de retenue et de l'appareil de remplissage aseptique dans des conditions prédéterminées, le procédé, de préférence, comprenant en outre la génération d'un bloc de vapeur d'eau dans le réseau d'acheminement pour isoler le produit alimentaire stérilisé du produit alimentaire qui n'a pas encore été stérilisé.

Fig. 1

*Fig. 2*

*Fig. 3*

*Fig. 4*

PRODUCT FLUID TEMPERATURE PROFILE OF THE
HEATER AND THE HOLD TUBE USED IN THE PROCESS
ESTABLISHMENT: TMODEL(t)

OBTAIN MEASURED PRODUCT FLUID TEMP PROFILE
OF THE HEATER AND THE HOLD TUBE AT CRITICAL POINTS:
TACT(t)

YES    TACT(t) ≥ TMODEL(t)
?

NO

IDENTIFY THE DEVIATION SECTION WARNING

DIVERT PRODUCT

*Fig. 5*

## Fig. 6

Fig. 7

EP 1 662 914 B1

**Fig. 8**

EP 1 662 914 B1

*Fig. 9*

Fig. 10

STERILE NITROGEN / STERILE AIR SUPPLY

ASEPTIC HOLDING TANK

18''''

ASEPTIC VALVE GROUP

22''''

126''''

402

400

130''''

132''''

146''''

124''''

134''''

N

A

122''''

134''''

M

128''''

146''''

E

416

O

B

146''''

148''''

149''''

404

116''''

20''''

430

F

118''''

ASEPTIC FILLER

410

412

120''''

VI

408

K

L

406

158''''

160''''

162''''

114''''

C

158''''

420

152''''

166''''

140''''

D

163''''

142''''

422

164''''

168''''

112''''

144''''

158''''

110''''

ASEPTIC TANK CIP RETURN

150''''

EP 1 662 914 B1

35

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 49143303 P
- US 5375654 A
- US 5802961 A

### Non-patent literature cited in the description

- **SASTRY.** Mathematical Evolution of Process Schedules for Aseptic Processing of Low-Acid Foods Containing Discrete Particulates. *Journal of Food Science,* 1986, vol. 51 (5), 1323-1332
- **CHANDARANA, D.I. ; GAVIN, III, A.** Establishing Thermoprocesses for Heterogeneous Foods To Be Processed Aseptically. *A Theoretical Comparison of Process Development Methods,* 1989, vol. 54 (1), 189-204
- **CHANDARANA, D.I. ; GAVIN, III, A. ; WHEATON, F.W.** Simulation of Parameters for Modeling Aseptic Processing of Foods Containing Particulates. *Food Technology,* 1989, 137-143
- **CHANG, S.Y. ; TOLEDO, R.T.** Heat Transfer and Simulated Sterilization of Particulate Solids in a Continuously Flowing System. *Journal of Food Science,* vol. 54 (4), 1017-10231030, 1989